# EUROPÄISCHE PATENTSCHRIFT

(11) **EP 1 631 521 B1**
(45) Veröffentlichungstag und Bekanntmachung des Hinweises auf die Patenterteilung: **13.10.2010**
(21) Anmeldenummer: 04733730.8
(22) Anmeldetag: 19.05.2004
(51) Int. Cl.: B66F 9/14, B66F 9/07, B65G 1/04

(54) **TELESKOPSCHUBARM, INSBESONDERE FÜR EIN LASTAUFNAHMEMITTEL**
TELESCOPIC PUSH ARM, PARTICULARLY FOR A LOAD-RECEIVING MEANS
BRAS DE POUSSEE TELESCOPIQUE UTILISE EN PARTICULIER POUR UN DISPOSITIF DE RECEPTION DE CHARGES

(30) Priorität: 20.05.2003 AT 7782003
(43) Veröffentlichungstag der Anmeldung: 08.03.2006
(73) Patentinhaber: TGW Transportgeräte GmbH, 4600 Wels (AT)
(72) Erfinder: HANSL, Rudolf, A-4020 Linz (AT); REISCHL, Josef, A-4623 Gunskirchen (AT)
(74) Vertreter: Burger, Hannes
(86) Internationale Anmeldenummer: PCT/AT2004/000175
(87) Internationale Veröffentlichungsnummer: WO 2004/103883

(56) Entgegenhaltungen:
- WO-A-03/019425
- CH-A- 678 310
- DE-A- 3 739 136
- DE-A- 4 217 084
- US-A- 3 402 836
- US-A1- 2003 185 656

## Beschreibung

Die Erfindung betrifft einen Teleskopschubarm für eine Lastaufnahmevorrichtung zum Ein- und Auslagern eines Ladehilfsmittels in ein bzw. aus einem Regallager und eine Lastaufnahmevorrichtung, wie in den Oberbegriffen der Ansprüche 1 und 26 beschrieben.

Aus der WO 03/019425 A1 und US 2003/0185656 A1 ist je ein gattungsgemäßer Teleskopschubarm einer Lastaufnahmevorrichtung zum Ein- und Auslagern eines quaderförmigen Ladehilfsmittels in ein bzw. aus einem Regallager bekannt, der einen Tragrahmen, einen mittleren Zwischenschlitten und einen äußeren Schlitten umfasst, die zu dem Tragrahmen und zueinander relativ verstellbar sind. Der äußere Schlitten ist mit quer zur Längserstreckung des Teleskopschubarmes verschwenkbaren Mitnehmerelementen versehen, die jeweils mit einem Stellantrieb (Aktuator) gekuppelt und denen Sensoren zur Überwachung ihrer Betriebsstellungen zugeordnet sind. Die Sensoren und/oder Aktuatoren sind am äußeren Schlitten angeordnet. Die Versorgung dieser Sensoren und/oder Aktuatoren mit elektrischer Energie, erfolgt mittels elektrisch leitender Verbindungen, wie beispielsweise Drahtleitungen. Diese Drahtleitungen sind nach der US 2003/0185656 A1 in Energieketten verlegt, die ausgehend von einer im Bereich des Tragrahmens angeordneten Schnittstelle (Versorgungsquelle) seitlich neben dem Teleskopschubarm zu Anschlüssen der Sensoren und/oder Aktuatoren führen. Der Nachteil dieser Lösung ist, dass selbst die kleinsten Energieketten einen relativ großen Mindestradius benötigen, um die Lebensdauer der Drahtleitungen relativ hoch zu halten. Dadurch bedingt, ergibt sich ein relativ großer Einbauraum und kann deshalb die heute zunehmend gestellte Anforderung, eine Lastaufnahmevornchtung möglichst kompakt und kleinbauend herzustellen, nicht erfüllt werden.

Eine weitere bekannte Ausführung besteht darin, dass die Energieversorgung der Sensoren und/oder Aktuatoren am äußeren Schlitten durch eine kompakte Kabeltrommel mit Schleifringkörper realisiert ist. Nachteilig sind die große Baugröße aufgrund des Mindestkabeldurchmessers sowie das hohe Gewicht und die relativ hohen Kosten. Ausführungen dieser Art können nur bei größeren Bauarten von Teleskopschubarmen eingesetzt werden.

Eine weitere, sehr platzsparende Ausführung für ein Übertragungsmittel zur Versorgung der Sensoren und/oder Aktuatoren am äußeren Schlitten eines Teleskopschubarmes mit elektrischer Energie, ist ebenfalls aus der US 2003/0185656 A1 bekannt, bei der die Stahllitzen der Zahnriemen für die Ein- und Ausfahrbewegung des mittleren Zwischenschlittens und äußeren Schlittens gleichzeitig als Übertragungsmittel für die elektrische Energie genützt wird und so eine sehr platzsparende und kostengünstige Energieversorgung möglich ist. Der Nachteil dieser Lösung ist aber, dass diese Anordnung aus funktionalen Gründen nur für Teleskopschubarme mit nur einem bewegbaren Schlitten oder maximal einem Zwischenschlitten und äußeren Schlitten realisierbar ist.

Aufgabe der vorliegenden Erfindung ist es, einen Teleskopschubarm zur Lastaufgabe oder Lastabgabe und eine Lastaufnahmevorrichtung zu schaffen, welche(r) eine sichere Energieübertragung zwischen einer auf einer Hubplattform eines Förderfahrzeuges angeordneten Schnittstelle und einem Sensor und/oder Aktuator auf einem ausfahrbaren Schlitten ermöglicht und sich durch eine einfache, kompakte sowie wartungsarme Bauform auszeichnet.

Die Aufgabe der Erfindung wird durch die im Kennzeichenteil der Ansprüche 1 und 26 wiedergegebenen Merkmale gelöst. Die Vorteile dabei sind, dass die elektrische Energie für einen auf dem teleskopierbaren Schlitten angeordneten Sensor und/oder Aktuator und/oder ein Signal für den Aktuator mittels zwischen dem Tragrahmen und Schlitten vorgesehener Schleifleitungsanordnung zuführbar und die Energie und/oder ein Signal mittels einer oder zwei zwischen dem Tragrahmen und Schlitten vorgesehener Schleifkörperanordnung(en) aus der Schleifleitungsanordnung abnehmbar ist. Mit anderen Worten ist der oder sind die Schleiflcörperanordnung(en) über Schleiflcontakt(e) mit der Schleifleitungsanordnung verbunden, wodurch eine kontinuierliche Energieversorgung des Sensors und/oder Aktuators, beispielsweise Stellantrieb, am äußeren Schlitten in jeder Relativlage des Schlittens zum Tragrahmen sichergestellt ist. Die Schleifleitungs- und Schleiflcörperanordnung sind sehr kompakt aufgebaut, womit kleine Abmessungen des Teleskopschubarmes sowie der Lastaufnahmevorrichtung realisiert werden können. Somit kann nunmehr aber auch die Anzahl der im Regallager untergebrachten Ladehilfsmittel erhöht werden, da durch die kleinbauende Bauform des Teleskopschubarmes der Abstand zwischen zwei im Regallager nebeneinander abgelegten Ladehilfsmittel reduziert werden kann.

Die Ausgestaltungen nach den Ansprüchen 2 bis 5 und 12 bis 16 sind vorteilhaft, da durch die wechselweise Anordnung der Schleifleitungs- und Schleifkörperanordnungen am Tragrahmen oder Schlitten, eine flexible Anpassung an die einsatzbedingten Erfordernisse möglich ist, ohne die kompakten Einbaumaße verändern zu müssen. Kann der Teleskopschubarm in Bezug auf die Hubplattform nach beide Richtung ausgefahren werden, ist der Tragrahmen oder Schlitten mit zwei Schleifkörperanordnungen ausgestattet, die möglichst nahe zu den stirnseitigen Endbereichen des Tragrahmens oder Schlittens angebracht sind, sodass eine Ausfahrweite vom Schlitten selbst bei dieser kompakten Bauweise des Teleskopschubarmes nicht eingeschränkt wird. Von Vorteil ist auch der modulare Aufbau des die Schleifleitungs- und Schleifkörperanordnungen aufweisenden Übertragungsmittels, da nur so viele Schleifleitungs- und Schleiflcörperanordnungen eingesetzt werden müssen, wie es die Schlittenanzahl des Teleskopschubarmes oder die Ausfahrrichtung desselben in nur eine oder in zwei Richtungen gerade erfordert und damit eine besonders wirtschaftliche Herstellung des Teleskopschubarmes möglich ist.

Die Ausgestaltungen nach den Ansprüchen 6 bis 8 und 17 bis 19 sind von Vorteil, da nun der mehrfach teleskopierbare Teleskopschubarm so weit ausfahren kann, dass Ladehilfsmitteln sowohl am in Ausfahrrichtung des Teleskopschubarmes gassennahen, vorderen als auch am gassenfernen, hinteren Abstellplatz im Regallager ein- bzw. auslagert werden können. Dadurch kann der Ausnützungsgrad des Regallagers, die Leistungsfähigkeit und damit die Wirtschaftlichkeit des Lagersystems erhöht werden. Die Regallager sind dabei entweder nur auf einer Seite neben einem Förderfahrzeug oder zu beiden Seiten vom Förderfahrzeug aufgestellt, wobei dann der Teleskopschubarm nur nach eine Richtung oder nach beide Richtungen in Bezug auf die Hubplattform ausfahrbar ist. Eine zuverlässige Versorgung des am äußeren Schlitten vorgesehenen Sensors und/oder Aktuators mit elektrischer Energie und/oder Übertragung von Signalen zu dem Sensor und/oder Aktuator wird erreicht, indem die Energie und/oder Signale vorerst von den zwischen dem Tragrahmen und Zwischenschlitten angeordneten Schleifleitungs- und Schleiflcörperanordnungen auf die zwischen dem Zwischenschlitten und äußeren Schlitten angeordneten Schleifleitungs- und Schleifkörperanordnungen übertragen und danach an einen Sensor und/oder Aktuator weitergeleitet wird.

Vorteilhaft sind auch die Fortbildungen nach den Ansprüchen 9 bis 11 und 20 bis 22, weil dadurch der mehrfach teleskopierbare Teleskopschubarm robust aufgebaut ist und dieser große Ausfahrweiten erreichen kann, sodass in Ausfahrrichtung des Teleskopschubarmes auch mehrere hintereinander ausgebildete Abstellplätze im Regallager angefahren und Ladehilfsmitteln ein- bzw. auslagert werden können.

Die Maßnahme nach Anspruch 23 ermöglicht eine zuverlässige Energieversorgung und/oder Signalübertragung auch bei maximal ausgefahrenem Teleskopschubarm.

Gemäß Anspruch 24, ist die Länge des Schleifkontaktes von der Schleikörperanordnung so abgestimmt, dass einerseits die Mindestauflagefläche für das sichere Zuführen der Energie und/oder zur sicheren Übertragung des Signals als auch eine maximal mögliche Flächenpressung zur Reduzierung des Verschleißes und Erreichen eines ruhigen Gleitens der Schleikörperanordnung erreicht oder aber nicht überschritten wird.

Eine mögliche vorteilhafte Ausbildung der Schleileitungs- und Schleifkörperanordnung ist im Anspruch 25 beschrieben.

Die Erfindung wird im nachfolgenden anhand der in den Zeichnungen dargestellten Ausführungsbeispiele näher erläutert.

Es zeigen:

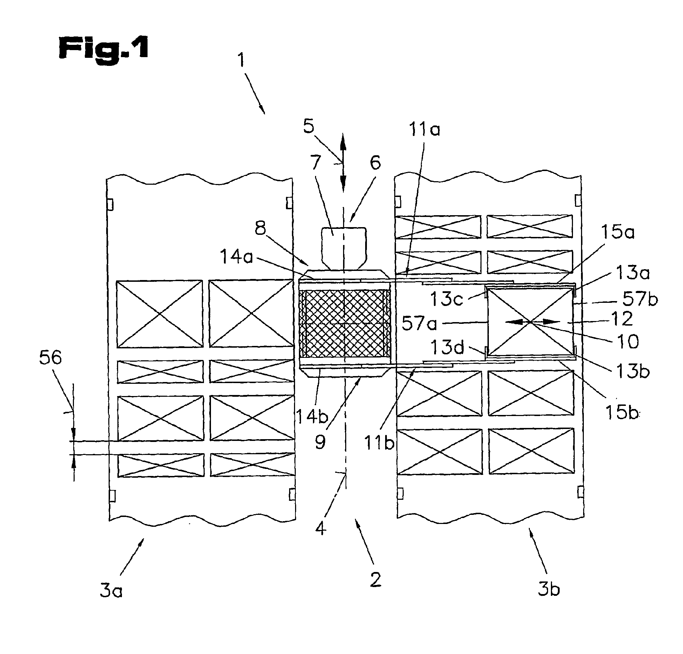

- Fig. 1: einen Ausschnitt aus einem Lagersystem mit zwei Regallagern und einem zwi- schen diesen verfahrbaren Förderfahrzeug, insbesondere Regalbediengerät, mit ei- ner Hubplattform und einem auf dieser angeordneten, erfindungsgemäßen Lastauf- nahmevorrichtung, in Draufsicht und schematischer Darstellung;

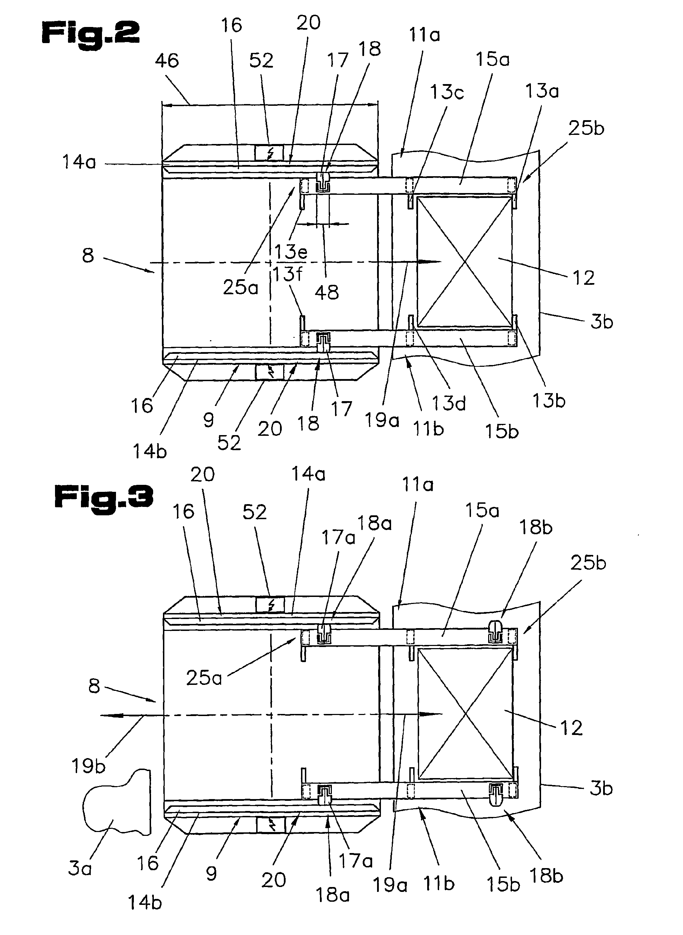

- Fig. 2: die erfindungsgemäße Lastaufnahmevornchtung auf der Hubplattform zum Ein- bzw. Auslagern eines Ladehilfsmittels in ein bzw. aus einem Einzelregal, mit einer ersten Ausführung von nach eine Richtung ausfahrbaren, erfindungsgemäßen Tele- skopschubarmen, in Draufsicht und schematischer Darstellung;
- Fig. 3: die erfindungsgemäße Lastaufnahmevornchtung auf der Hubplattform zum Ein- bzw. Auslagern eines Ladehilfsmittels in ein bzw. aus einem Einzelregal, mit einer ersten Ausführung von nach beide Richtungen ausfahrbaren, erfindungsgemäßen Teleskopschubarmen, in Draufsicht und schematischer Darstellung;

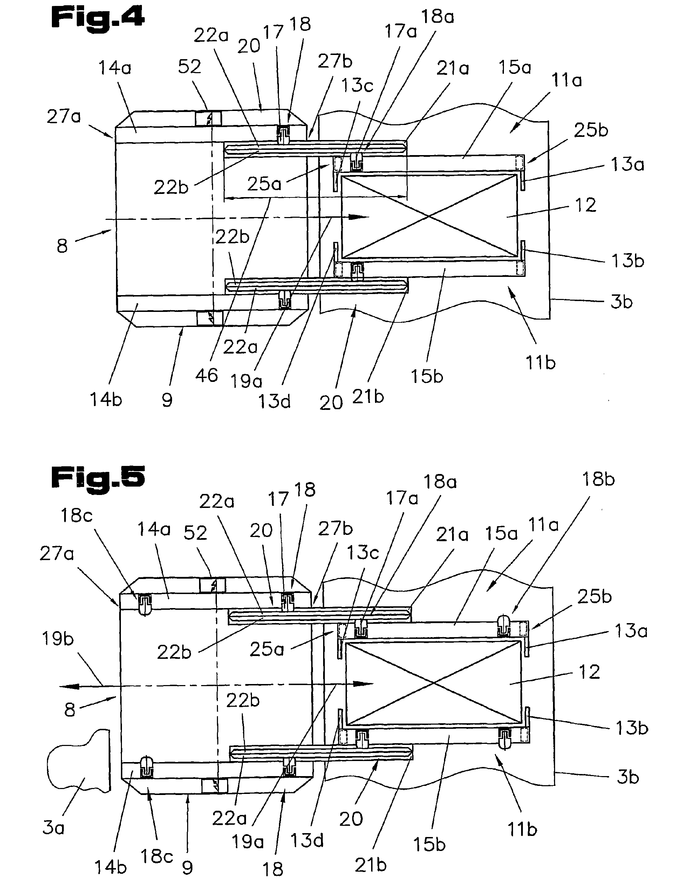

- Fig. 4: die erfindungsgemäße Lastaufnahmevorrichtung auf der Hubplattform zum Ein- bzw. Auslagern eines Ladehilfsmittels in ein bzw. aus einem Einzelregal, mit einer zweiten Ausführung von nach eine Richtung ausfahrbaren, erfindungsgemäßen Te- leskopschubarmen, in Draufsicht und schematischer Darstellung;
- Fig. 5: die erfindungsgemäße Lastaufiiahmevorrichtung auf der Hubplattform zum Ein- bzw. Auslagern eines Ladehilfsmittels in ein bzw. aus einem Einzelregal, mit einer zweiten Ausführung von nach beide Richtungen ausfahrbaren, erfindungsgemäßen Teleskopschubarmen, in Draufsicht und schematischer Darstellung;

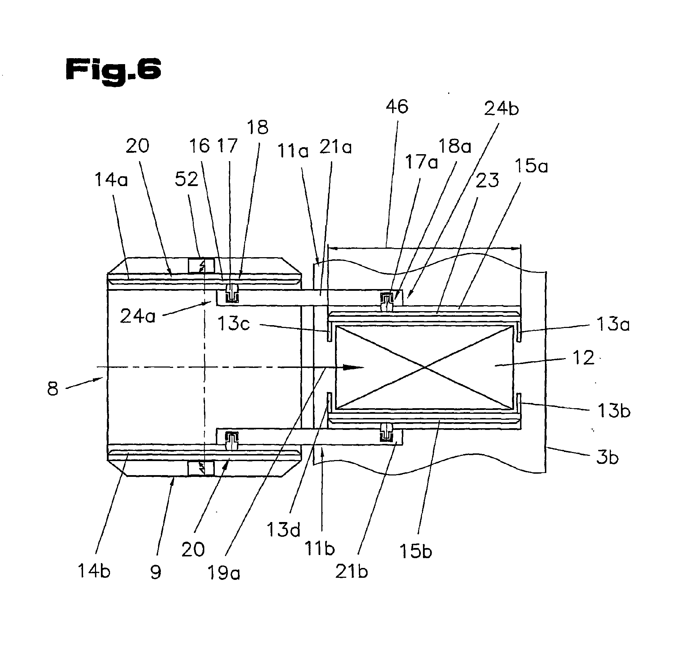

- Fig. 6: die erfindungsgemäße Lastaufnahmevorrichtung auf der Hubplattform zum Ein- bzw. Auslagern eines Ladehilfsmittels in ein bzw. aus einem Einzelregal, mit einer dritten Ausführung von nach eine Richtung ausfahrbaren, erfindungsgemäßen Te- leskopschubarmen, in Draufsicht und schematischer Darstellung;

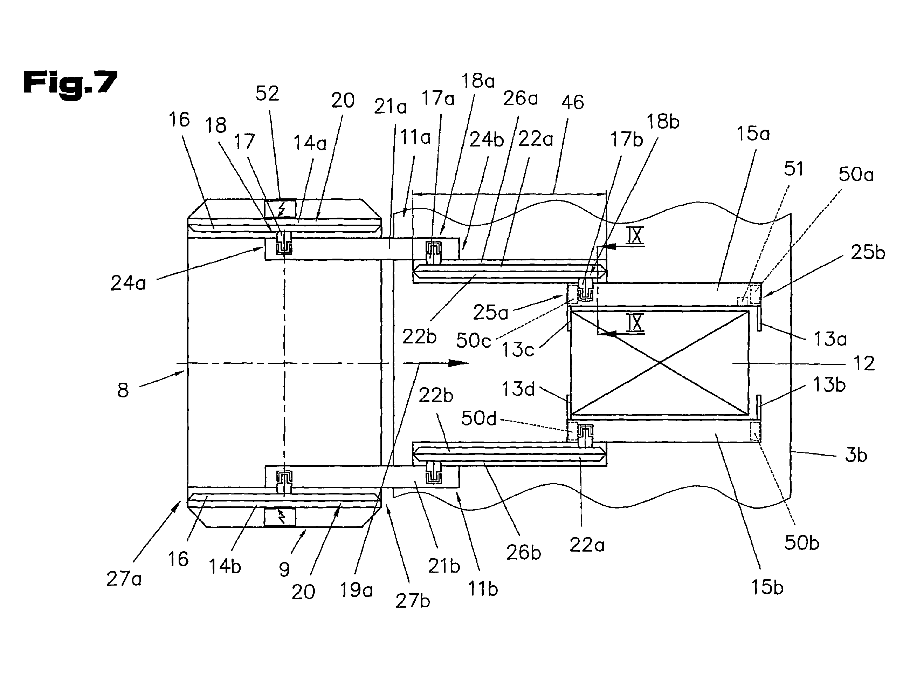

- Fig. 7: die erfindungsgemäße Lastaufnahmevornchtung auf der Hubplattform zum Ein- bzw. Auslagern eines Ladehilfsmittels in ein bzw. aus einem Doppelregal, mit ei- ner vierten Ausführung von nach eine Richtung ausfahrbaren, erfmdungsgemäßen Teleskopschubarmen, in Draufsicht und schematischer Darstellung;

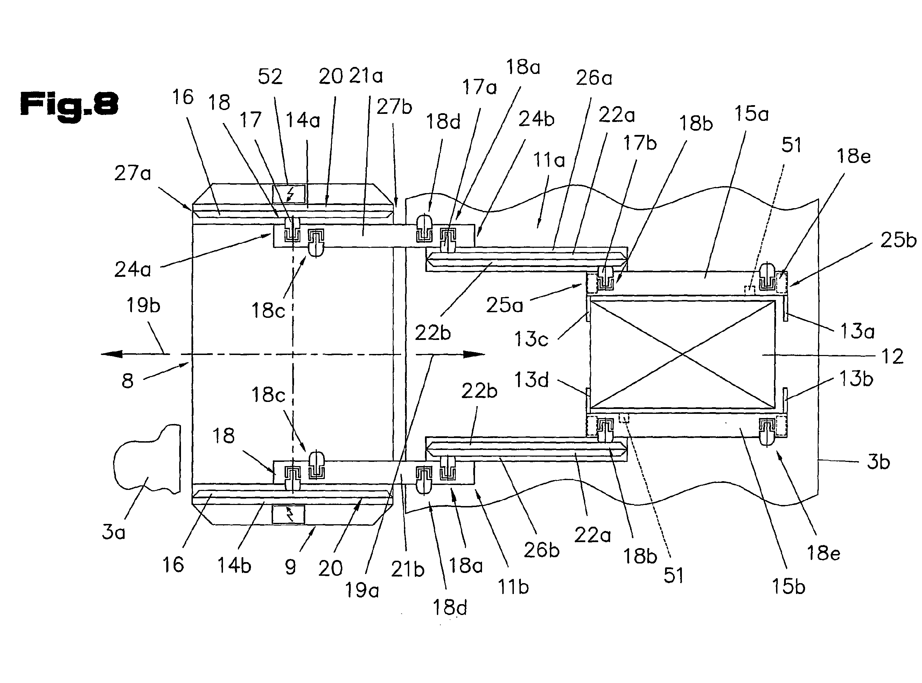

- Fig. 8: die erfindungsgemäße Lastaufnahmevornchtung auf der Hubplattform zum Ein- bzw. Auslagern eines Ladehilfsmittels in ein bzw. aus einem Doppelregal, mit ei- ner dritten Ausführung von nach beide Richtungen ausfahrbaren, erfindungsgemä- ßen Teleskopschubarmen, in Draufsicht und schematischer Darstellung;

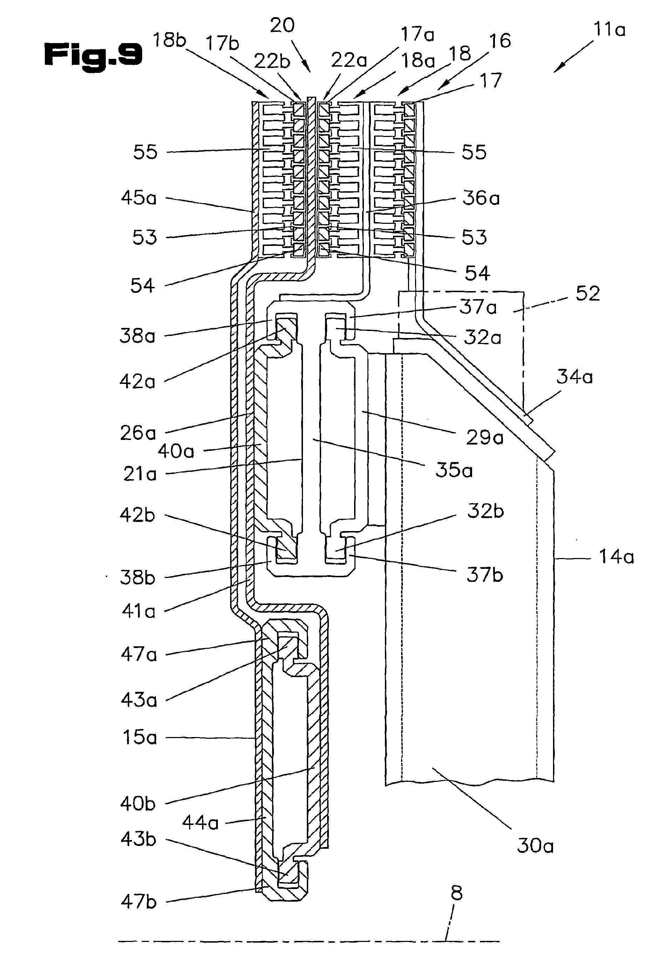

- Fig. 9: einen der Teleskopschubarme der Lastaufnahmevorrichtung mit einem Tragrah- men, ersten und zweiten Zwischenschlitten, einem äußeren Schlitten und einem Übertragungsmittel für Strom und/oder Signale mit Schleifleitungs- und Schleif- körperanordnungen, in Stirnansicht geschnitten gemäß den Linie IX-IX in Fig. 7 und vereinfachter Darstellung;

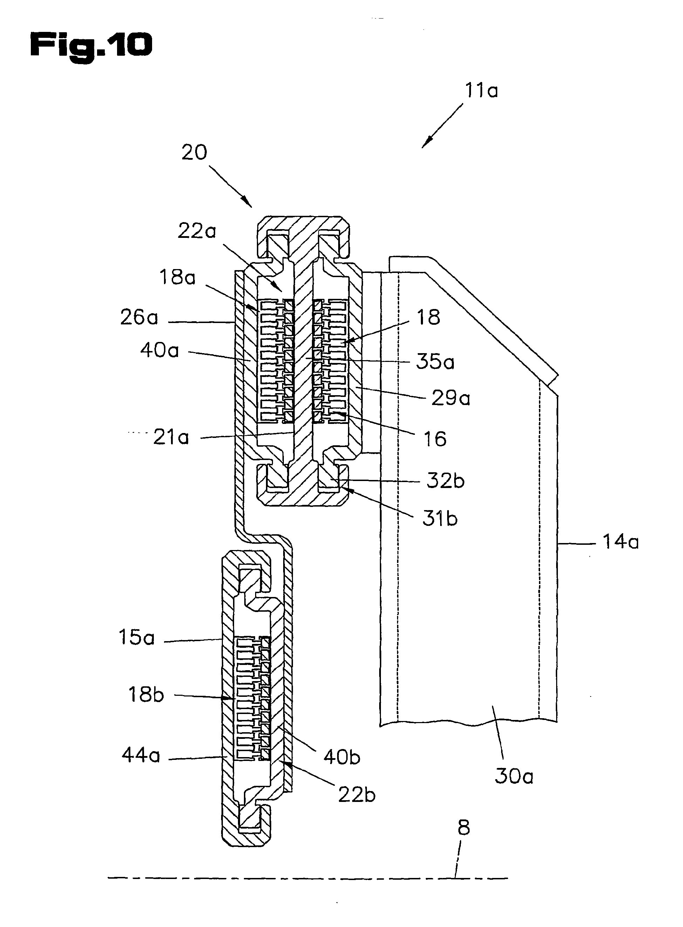

- Fig. 10: einen der Teleskopschubarme der Lastaufnahmevorrichtung mit einem Tragrah- men, ersten und zweiten Zwischenschlitten, einem äußeren Schlitten und einem Übertragungsmittel für Strom und/oder Signale mit einer anderen Anordnung der Schleifleitungs- und Schleiflcörperanordnungen, in Stirnansicht, teilweise geschnit- ten und vereinfachter Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

Die Fig. 1 zeigt einen Ausschnitt eines vereinfacht dargestellten Lagersystems 1. Dieses umfasst beidseitig zu einer Gasse 2 angeordnete Regallager 3a, 3b und ein entlang der Gasse 2 bevorzugt auf einer Schiene 4 nach beide Richtungen - gemäß Doppelpfeil 5 - geführt verfahrbares, nicht näher dargestelltes Förderfahrzeug, insbesondere ein Regalbediengerät 6. Das Regalbediengerät 6 weist einen lotrechten Mast 7 auf, auf dem eine heb- und senkbare Hubplattform 8 geführt ist. Auf der Hubplattform 8 ist eine Lastaufnahmevorrichtung 9 zum Ein- bzw. Auslagern eines Ladehilfsmittels 12 in ein bzw. aus einem Regallager 3a, 3b angeordnet. Die Lastaufnahmevorrichtung 9 umfasst zwei zueinander parallel verlaufende und im Abstand voneinander angeordnete Teleskopschubarme 11a, 11b, die gemäß dem Doppelpfeil 10 in quer zur Gasse 2 verlaufender Ein- und Ausfahrrichtung synchron und gleichsinnig verstellbar sind. Die Teleskopschubarme 11a, 11b weisen nach dieser gezeigten Ausführung und wie in den Fig. 7 und 8 näher dargestellt, jeweils einen Tragrahmen 14a, b, einen ersten und zweiten Zwischenschlitten sowie einen dem zu transportierenden Ladehilfsmittel 12 benachbarten, äußeren Schlitten 15a, 15b auf. Die Zwischenschlitten sind relativ zum Tragrahmen 14a, 14b und der Schlitten 15a, b und die Zwischenschlitten relativ zueinander verstellbar.

Wie in Fig. 1 eingetragen, sind die äußeren Schlitten 15a, 15b jeweils mit zwei in Ein- und Ausfahrrichtung im Abstand angeordneten, quer zur Längsrichtung der Teleskopschubarme 11a, 11b verstellbaren, insbesondere verschwenkbaren, und beispielsweise getrennt ansteuerbaren Mitnehmerelementen 13a, 13b, 13c, 13d versehen, wobei der Abstand größer ist als eine in Ausfahrrichtung des Teleskopschubarmes 11a, 11b betrachtet zwischen einer vorderen und hinteren Seitenwand gemessene Abmessung des Ladehilfsmittels 12.

Beim Einlagern eines Ladehilfsmittels 12 von der Hubplattform 8 in das Regallager 3a, 3b wird das in Ausfahrrichtung betrachtet, hintere Paar von Mitnehmerelementen 13c, 13d aus einer Ruhestellung in eine den Außenumfang der Teleskopschubarme 11a, 11b überragende Arbeitsstellung verstellt. In der Arbeitsstellung der Mitnehmerelemente 13c, 13d wird die in Ausfahrrichtung betrachtet, vordere Seitenwand 57a des am gassennahen oder gassenfernen Abstellplatz im Regallager 3a, 3b abzustellenden Ladehilfsmittels 12 formschlüssig hintergriffen. Danach wird alleinig auf Grund der Ausfahrbewegung der Teleskopschubarme 11a, 11b das Ladehilfsmittel 12 von der Hubplattform 8 auf das Regallager 3a, 3b abgeschoben.

Beim Auslagern des Ladehilfsmittels 12 vom Regallager 3a, 3b auf die Hubplattform 8, verfahren die Teleskopschubarme 11a, 11b zu beiden Seiten neben dem auszulagernden Ladehilfsmittel 12 bis über eine hintere Seitenwand 57b dieses auszulagernden Ladehilfsmittels 12 hinaus, worauf das in Ausfahrrichtung betrachtet, vordere Paar von Mitnehmerelementen 13a, 13b aus einer Ruhestellung in eine den Außenumfang der Teleskopschubarme 11a, 11b überragende Arbeitsstellung verstellt wird. In der Arbeitsstellung der Mitnehmerelemente 13a, 13b wird die in Ausfahrrichtung betrachtet, hintere Seitenwand 57b des am gassennahen oder gassenfernen Abstellplatz im Regallager 3a, 3b abgestellten Ladehilfsmittels 12 formschlüssig hintergriffen. Danach wird alleinig auf Grund der Einfahrbewegung der Teleskopschubarme 11a, 11b das Ladehilfsmittel 12 vom Regallager 3a, 3b auf die Hubplattform 8 abgeschoben.

Die aus der Ruhestellung in die Arbeitsstellung verstellbaren Mitnehmerelemente 13a, 13b, 13c, 13d eines jeden Teleskopschubarmes 11a, 11b, sind an wenigstens einen, nicht gezeigten elektrischen Stellantrieb (Aktuator), insbesondere einen Elektromotor, gekuppelt. Wie ebenfalls nicht dargestellt, werden die Ruhe- und Arbeitsstellung der Mitnehmerelemente 13a, 13b, 13c, 13d jeweils über einen Sensor überwacht. Der Stellantrieb und die Sensoren der Teleskopschubarme 11a, 11b sind am äußeren Schlitten 15a, 15b angeordnet. Natürlich können noch weitere, getrennt ansteuerbare Aktuatoren und/oder Sensoren für andere Funktionen am äußeren Schlitten 15a, 15b angeordnet werden.

Um den Aktuator und/oder die Sensoren mit elektrischer Energie und/oder Signalen zu versorgen, weist jeder Teleskopschubarm 11a, 11b ein Übertragungsmittel 20 auf, das in den nachfolgenden Figuren beschrieben wird.

Die Fig. 2 zeigt in sehr vereinfachter Darstellung eine Hubplattform 8, auf der die Lastaufnahmevorrichtung 9 angebracht ist, die aus zwei im Abstand parallel nebeneinander angeordneten Teleskopschubarme 11a, 11b besteht. Die einseitig ausfahrbaren Teleskopschubarme 11a, 11b weisen jeweils einen Tragrahmen 14a, 14b und einen an diesem in Längsrichtung auf einer Linearführung verschiebbar gelagerten Schlitten 15a, 15b auf. Die Tragrahmen 14a, 14b sind auf der Hubplattform 8 befestigt. Für die synchrone Ein- und Ausfahrbewegung der Schlitten 15a, 15b, wird auf diese synchron eine Antriebskraft übertragen. An jedem Schlitten 15a, 15b sind, wie bereits oben beschrieben, drei Mitnehmerelemente 13a, 13b, 13c, 13d, 13e, 13f, Sensoren (nicht dargestellt) und in strichlierte Linien eingetragene Stellantriebe (Aktuatoren) angeordnet. Jedes Mitnehmerelemente 13a bis 13f ist mittels einem Stellantrieb um eine in Längsrichtung des Teleskopschubarmes 11a, 11b verlaufende Achse aus der Ruhestellung in die Arbeitstellung verschwenkbar. Die Mitnehmerelemente 13a bis 13f umgreifen in ihrer Arbeitsstellung ein Ladehilfsmittel 12 an einer vorderen oder hinteren Seitenwand formschlüssig.

Jeder Teleskopschubarm 11a, 11b umfasst ein Übertragungsmittel 20 zum Zuführen von elektrischer Energie und/oder zum Übertragen von Signalen von einer auf der Hubplattform 8 angeordneten Energie- und/oder Signal-Schnittstelle 52 zu den Aktuatoren und/oder Sensoren am Schlitten 15a, 15b. Das mit der Schnittstelle 52 elektrisch leitend verbundene Übertragungsmittel 20 ist nach dieser Ausführung durch eine Schleifleitungsanordnung 16 und eine Schleifkörperanordnung 18 gebildet, wobei zwischen der Schleifleitungsanordnung 16 und Schleifkörperanordnung 18 zumindest ein elektrischer Schleifkontakt 17 ausgebildet ist. Die Schleifleitungsanordnung 16 ist durch mehrere Schleifleitungen gebildet und am Tragrahmen 14a, 14b auf seiner dem Schlitten 15a, 15b zugewandten Seite befestigt. Eine Länge 46 der Schleifleitungsanordnung 16 entspricht annähernd der Länge des Tragrahmens 14a, 14b. Die Schleifkörperanordnung 18 ist durch mehrere Schleifkörper, insbesondere federbetätigte Schleifkohlen, gebildet und am Schlitten 15a, 15b im in Ausfahrrichtung - gemäß Pfeil 19a- eines Teleskopschubarmes 11a, 11b gegenüberliegenden, hinteren Endbereich 25a befestigt. Eine Länge 48 des Schleifkontaktes 17 der Schleifkörperanordnung 18 zwischen der Schleifleitungsanordnung 16 und der Schleifkörperanordnung 18 entspricht einem Bruchteil der Länge 46 der Schleifleitungsanordnung 16. Die Schleifleitungsanordnung 16 der Teleskopschubarme 11a, 11b ist jeweils an eine Schnittstelle 52 angeschlossen, die ihrerseits die Schleifleitungsanordnung 16 mit elektrischer Energie versorgt bzw. werden Signale von der Schnittstelle 52 an die Schleifleitungsanordnung 16 übertragen. Diese Schnittstelle 52 ist mit einer übergeordneten Steuerung, beispielsweise speicherprogammierbaren Steuerung (SPS), und/oder einer externen Energiequelle verbunden.

Eine andere nicht gezeigte Ausführung der einseitig ausfahrbaren Teleskopschubarme 11a, 11b, besteht in einer zur Fig. 2 alternativen Anordnung der Schleifleitungs- und Schleifkörperanordnung 16, 18. Dazu ist die Schleifleitungsanordnung 16 am Schlitten 15a, 15b auf seiner dem Tragrahmen 14a, 14b zugewandten Seite befestigt und erstreckt sich im wesentlichen über die gesamte Länge des Schlittens 15a, 15b. Die Schleifkörperanordnung 18 dagegen, ist am Tragrahmen 14a, 14b im in Ausfahrrichtung - gemäß Pfeil 19a - der Teleskopschubarme 11a, 11b vorderen Endbereich befestigt. Die Schleifkörperanordnung 18 der Teleskopschubarme 11a, 11b ist jeweils an eine Schnittstelle 52 angeschlossen, die ihrerseits die Schleifkörperanordnung 18 mit elektrischer Energie versorgt bzw. werden Signale von der Schnittstelle 52 an die Schleifkörperanordnung 18 übertragen.

Die Schleifleitungsanordnung 16 und Schleifkörperanordnung 18 sind gegenüber dem Tragrahmen 14a, 14b und Schlitten 15a, 15b elektrisch isoliert.

Die elektrische Energie für einen Sensor und/oder Aktuator am Schlitten 15a, 15b und die Signale für den Aktuator ist mittels der zwischen dem Tragrahmen 14a, 14b und Schlitten 15a, 15b vorgesehenen Schleifleitungsanordnung 16 zuführbar und mittels der zwischen dem Tragrahmen 14a, 14b und Schlitten 15a, 15b vorgesehenen Schleifkörperanordnung 18 abnehmbar.

Da nun die Schleifkörper der Schleifkörperanordnung 18 entlang der Schleifleitungen der Schleifleitungsanordnung 16 geführt sind bzw. gleiten und miteinander in elektrischer Verbindung stehen bzw. durch permanenten Andruck mindestens eines Schleifkörpers auf mindestens eine elektrisch leitfähige Schleifleitung (nicht dargestellt), kann während der Aus- und Einfahrbewegung der Teleskopschubarme 11a, 11b die elektrische Energie und/oder Signale auf den Aktuator und/oder Sensor übertragen werden.

Die Ausführungsform der Lastaufnahmevorrichtung 9 nach Fig. 3 unterscheidet sich von jener nach Fig. 2 nur dadurch, dass die Teleskopschubarme 11a, 11b in Bezug auf die Hubplattform 8 nach beide Richtungen ausfahrbar sind und deren Schlitten 15a, 15b jeweils in beiden Endbereichen 25a, 25b mit einer Schleifkörperanordnung 18a, 18b versehen sind. Die Schleifkörperanordnungen 18a, 18b je Schlitten 15a, 15b sind baulich voneinander getrennt und gegebenenfalls elektrisch leitend miteinander verbunden, wie dies jedoch nicht dargestellt ist. Die Schleifleitungsanordnungen 16 sind jeweils wiederum an den Tragrahmen 14a, 14b befestigt. Mit dieser Ausführung können nun mittels der Lastaufnahmevorrichtung 9 zwei zu beiden Seiten des Regalbediengerätes 6 aufgestellte Regallager 3a, 3b bedient werden, daher Ladehilfsmittel 12 ein- bzw. ausgelagert werden. Werden die Schlitten 15a, 15b in Ausfahrrichtung - gemäß Pfeil 19a - nach rechts ausgefahren, sind die in Ausfahrrichtung - gemäß Pfeil 19a - betrachtet, im hinteren Endbereich 25a der Schlitten 15a angeordneten Schleiflcörperanordnungen 18a über die Schleiflcontakte 17a mit den Schleifleitungsanordnungen 16 elektrisch verbunden. Werden hingegen die Schlitten 15a, 15b in Ausfahrrichtung - gemäß Pfeil 19b - nach links ausgefahren, sind die in Ausfahrrichtung - gemäß Pfeil 19b - betrachtet, im hinteren Endbereich 25b der Schlitten 15a, 15b angeordneten Schleifkörperanordnungen 18b über die Schleifkontakte 17b (nicht eingetragen) mit den Schleifleitungsanordnungen 16 elektrisch verbunden. Somit ist unabhängig von der Ausfahrrichtung der Schlitten 15a, 15b der Teleskopschubarme 11a, 11b über die Schleifleitungs- und Schleifkörperanordnungen 16, 18a oder 18b stets eine elektrische Verbindung zwischen der Schnittstelle 52 und den Sensoren und/oder Aktuatoren hergestellt und kann zu diesen Strom zugeführt und/oder Signale übertragen werden.

Eine andere nicht gezeigte Ausführung der in Bezug auf die Hubplattform 8 nach beide Richtungen ausfahrbaren Teleskopschubarme 11a, 11b, besteht in einer zur Fig. 3 alternativen Anordnung der Schleifleitungs- und Schieilkörperanordnungen 16, 18a, 18b. Dazu ist die Schleifleitungsanordnung 16 am Schlitten 15a, 15b auf seiner dem Tragrahmen 14a, 14b zugewandten Seite befestigt und erstreckt sich im wesentlichen über die gesamte Länge des Schlittens 15a, 15b. Die baulich getrennten Schleifkörperanordnungen 18 dagegen, sind am Tragrahmen 14a, 14b in seinen gegenüberliegenden, stirnseitigen Endbereichen befestigt. Die Schleifkörperanordnungen 18a, 18b des Teleskopschubarmes 11a, 11b sind an eine Schnittstelle 52 angeschlossen, die ihrerseits die Schleifkörperanordnungen 18a, 18b mit elektrischer Energie versorgt bzw. werden Signale von der Schnittstelle 52 an die Schleifkörperanordnung 18a, 18b übertragen.

Die Fig. 4 zeigt in sehr vereinfachter Darstellung die Hubplattform 8, auf der die erfindungsgemäße Lastaufnahmevorrichtung 9 angebracht ist. Die Lastaufnahmevorrichtung 9 weist zwei parallel zueinander angeordnete, in Bezug auf die Hubplattform 8 einseitig ausfahrbare Teleslcopschubarme 11a, 11b auf, die jeweils einen an der Hubplattform 8 befestigten Tragrahmen 14a, 14b, einen zu diesem relativ verstellbaren, äußeren Schlitten 15a, 15b sowie einen zwischen dem Tragrahmen 14a, 14b und Schlitten 15a, 15b angeordneten Zwischenschlitten 21a, 21b umfassen. Der Schlitten 15a, 15b und Zwischenschlitten 21a, 21b sind relativ zueinander verstellbar und auf in Längsrichtung eines Teleskopschubarmes 11a, 11b verlaufenden Linearführungen, insbesondere Gleitführungen, linear verschiebbar geführt. Die äußeren Schlitten 15a, 15b sind mit den oben beschriebenen, mittels den in strichlierte Linien eingetragenen Aktuatoren verstellbaren Mitnehmerelementen 13a, 13b, 13c, 13d ausgestattet, wobei beim Ein- bzw. Auslagervorgang ein Paar von Mitnehmerelementen 13a, 13b, 13c, 13d ein Ladehilfsmittel 12 an der in Ausfahrrichtung - gemäß Pfeil 19a - betrachtet, hinteren oder vorderen Seitenwand formschlüssig umgreifen ist.

Nach dieser Ausführung des Übertragungsmittels 20 je Teleskopschubarm 11a, 11b, weist der Zwischenschlitten 21a, 21b auf seinen dem Tragrahmen 14a, 14b und Schlitten 15a, 15b zugewandten Seiten jeweils eine Schleifleitungsanordnung 22a, 22b auf Der Tragrahmen 14a, 14b der Teleskopschubarme 11a, 11b ist in seinem in Ausfahrrichtung - gemäß Pfeil 19a - betrachtet, vorderen Endbereich 27b und der Schlitten 15a, 15b der Teleskopschubarme 11a, 11b ist in seinem in Ausfahrrichtung - gemäß Pfeil 19a - gegenüberliegenden, hinteren Endbereich 25a jeweils mit einer Schleifkörperanordnung 18, 18a versehen, wobei zwischen einer Schleifleitungsanordnung 22a und 22b und einer Schleifkörperanordnung 18 und 18a jeweils wenigstens ein elektrischer Schleifkontakt 17 und 17a ausgebildet sind. Die auf dem Zwischenschlitten 21a, 21b befestigten Schleifleitungsanordnungen 22a, 22b sind elektrisch leitend miteinander verbunden und weisen eine Länge 46 auf, die sich im wesentlichen über die gesamte Länge des Zwischenschlittens 21a, 21b erstreckt. Die Schleifleitungsanordnungen 22a, 22b können eine einstückig hergestellte Baueinheit bilden.

Die Schleifkörper- und Schleifleitungsanordnungen 18, 18a, 22a, 22b vom Übertragungsmittel 20, sind gegenüber dem Tragrahmen 14a, 14b, äußeren Schlitten 15a, 15b sowie Zwischenschlitten 21a, 21b elektrisch isoliert und bilden die elektrische Verbindung zwischen der Schnittstelle 52 und einem am äußeren Schlitten 15a, 15b angeordneten Sensor und/oder Aktuator aus. Die Schleifkörperanordnung 18 der Teleskopschubarme 11a, 11b sind an eine Schnittstelle 52 angeschlossen.

Der Strom und/oder ein elektrisches Signal, wird von der Schnittstelle 52 über die mittels Schleifkontakt 17, 17a elektrisch verbundenen Schleifkörper- und Schleifleitungsanordnungen 18, 18a, 22a, 22b auf den am äußeren Schlitten 15a, 15b angeordneten Sensor und/oder Aktuator übergeleitet, unabhängig davon, ob die Teleskopschubarme 11a, 11b in eine Grurdstellung auf der Hubplattform 8 eingefahren oder in eine Transportstellung in das Regallager 3a ausgefahren sind.

Die Ausfizhrungsform nach der Fig. 5 unterscheidet sich von jener nach Fig. 4 nur dadurch, dass die Teleskopschubarme 11a, 11b in Bezug auf die Hubplattform 8 nach beide Richtungen ausfahrbar sind und der äußere Schlitten 15a, 15b als auch der Tragrahmen 14a, 14b eines jeden Teleskopschubarmes 11a, 11b jeweils in seinen gegenüberliegenden, stirnseitigen Endbereichen 25a, 25b, 27a, 27b mit je einer Schleifkörperanordnung 18a, 18b, 18, 18c versehen sind. Jeder Zwischenschlitten 21a, 21b weist wiederum auf seinen dem Tragrahmen 14a, 14b und Schlitten 15a, 15b zugewandten Seiten jeweils eine Schleifleitungsanordnung 22a, 22b auf. Die Schleifleitungsanordnung 22a und 22b und eine Schleifkörperanordnung 18 und 18a bilden jeweils einen elektrischen Schleifkontakt 17 und 17a aus. Die Schleifleitungsanordnungen 22a, 22b am Zwischenschlitten 21a, 21b sind elektrisch leitend miteinander verbunden. Durch diese Anordnung von Schleifkörper- und Schleifleitungsanordnungen 18, 18a, 18b, 18c, 22a, 22b ist unabhängig von der Ausfahrrichtung - gemäß Pfeil 19a oder 19b - der Teleskopschubarme 11a, 11b über eine der Schleiflcörperanordnungen 18 oder 18c je Tragrahmen 14a, 14b, die Schleifleitungsanordnungen 22a, 22b und eine der Schleifkörperanordnungen 18a oder 18b je Schlitten 15a, 15b stets eine elektrische Verbindung zwischen der Schnittstelle 52 und einem Sensor und/oder Aktuator am Schlitten 15a, 15b hergestellt und können auf diese Strom und/oder Signale übertragen werden.

Eine andere nicht gezeigte Ausführung der beidseitig ausfahrbaren Teleskopschubarme 11a, 11b, besteht in einer zur Fig. 5 alternativen Anordnung der Schleifkörper- und Schleifleitungsanordnung 18 bis 18c, 22a, 22b. Dazu sind der Schlitten 15a, 15b und Tragrahmen 14a, 14b jeweils auf einander zugewandten Seiten mit je einer Schleifleitungsanordnung versehen. Der entsprechende Zwischenschlitten 21a, 21b dagegen, weist auf seinen dem Tragrahmen 14a, 14b und Schlitten 15a, 15b zugewandten Seiten jeweils in gegenüberliegenden stirnseitigen Endbereichen je eine Schleifkörperanordnung auf, wobei jeweils zwischen einer Schleifleitungsanordnung und einer Schleifkörperanordnung ein elektrischer Schleifkontakt ausgebildet ist. Für die Übertragung von Strom und/oder Signale, sind zumindest die am entsprechenden Zwischenschlitten 21a, 21b diagonal gegenüberliegenden Schleifkörperanordnungen elektrisch leitend miteinander verbunden.

Die Ausfuhrungsform der Lastaufnahmevorrichtung 9 nach Fig. 6 zeigt eine Variante der Fig. 4. Dabei sind auf einander zugewandten Seiten des Schlittens 15a, 15b und Tragrahmens 14a, 14b eines Teleskopschubarmes 11a, 11b je eine Schleifleitungsanordnung 16, 23 befestigt. Der Zwischenschlitten 21a, 21b ist auf seiner dem Tragrahmen 14a, 14b zugewandten Seite im in Ausfahrrichtung - gemäß Pfeil 19a - gegenüberliegenden, hinteren Endbereich 24a und auf seiner dem Schlitten 15a, 15b zugewandten Seite im in Ausfahrrichtung - gemäß Pfeil 19a - vorderen Endbereich 24b mit je einer Schleifkörperanordnung 18, 18a versehen, wobei jeweils zwischen einer Schleifleitungsanordnung 16, 23 und einer Schleifkörperanordnung 18, 18a wenigstens ein elektrischer Schleifkontakt 17, 17a ausgebildet ist bzw. die Schleifleitungs- und Schleifkörperanordnungen 16, 23, 18, 18a in elektrischer Verbindung stehen. Die Schleifkörperanordnungen 18, 18a am Zwischenschlitten 21a, 21b sind elektrisch leitend miteinander verbunden. Die Länge 46 der Schleifleitungsanordnungen 16, 23 entspricht im wesentlichen der Länge des Tragrahmens 14a, 14b und Schlittens 15a, 15b.

Die Fig. 7 zeigt in sehr vereinfachter Darstellung eine Hubplattform 8, auf der die erfindungsgemäße Lastaufnahmevorrichtung 9 angebracht ist. Die Lastaufnahmevorrichtung 9 weist zwei parallel zueinander angeordnete, in Bezug auf die Hubplattform 8 einseitig ausfahrbare Teleskopschubarme 11a, 11b auf, die jeweils einen Tragrahmen 14a, 14b, einen zu diesem relativ verstellbaren, äußeren Schlitten 15a, 15b, einen dem Tragrahmen 14a, 14b benachbarten, ersten Zwischenschlitten 21a, 21b und einen dem Schlitten 15a, 15b benachbarten, zweiten Zwischenschlitten 26a, 26b umfassen. Zusätzlich ist jeder Teleskopschubarm 11a 11b mit einem Übertragungsmittel 20 zum Zuführen von elektrischer Energie und/oder zum Übertragen von Signalen von der Energie- und/oder Signal-Schnittstelle 52 zu den am Schlitten 15a, 15b befestigten Stellantrieben (Aktuatoren 50a bis 50d) für die Mitnehmerelemente 13a bis 13d und/oder einem Sensor 51 ausgestattet, welches durch die Schleifleitungs- und Schleifkörperanordnungen 16, 22a, 22b, 18, 18a, 18b gebildet ist. Der Sensor 51 dient beispielsweise zum Erfassen eines Belegungszustandes im Regallager 3b und dgl.. Die Zwischenschlitten 21a, 21b, 26a, 26b sind relativ zum Tragrahmen 14a, 14b und der Schlitten 15a, b und die Zwischenschlitten 21a, 21b, 26a, 26b relativ zueinander verstellbar. Der erste und zweite Zwischenschlitten 21a, 21b, 26a, 26b als auch der äußere Schlitten 15a, 15b jedes Teleskopschubarmes 11a, 11b sind auf in Längsrichtung des Teleskopschubarmes 11a, 11b verlaufenden Linearführungen verschiebbar geführt.

Der Tragrahmen 14a, 14b ist auf seiner dem Schlitten 15a, 15b zugewandten Seite mit der Schleifleitungsanordnung 16 und der dem Schlitten 15a, 15b benachbarte, zweite Zwischenschlitten 26a, 26b auf seinen dem Tragrahmen 14a, 14b und Schlitten 15a, 15b zugewandten Seiten mit jeweils einer Schleifleitungsanordnung 22a, 22b versehen. Der dem Tragrahmen 14a, 14b benachbarte, erste Zwischenschlitten 21a, 21b ist auf seiner dem Tragrahmen 14a, 14b zugewandten Seite im in Ausfahrrichtung - gemäß Pfeil 19a - gegenüberliegenden, hinteren Endbereich 24a und auf seiner dem Schlitten 15a, 15b zugewandten Seite im in Ausfahrrichtung - gemäß Pfeil 19a - betrachtet, vorderen Endbereich 24b mit je einer Schleifkörperanordnung 18, 18a versehen. Der äußere Schlitten 15a, 15b weist im in Ausfahrrichtung - gemäß Pfeil 19a - gegenüberliegenden, hinteren Endbereich 25a eine Schleifkörperanordnung 18b auf. Die Schleifkörperanordnungen 18, 18a am ersten Zwischenschlitten 21a, 21b als auch die Schleifleitungsanordnungen 22a, 22b am zweiten Zwischenschlitten 26a, 26b sind jeweils untereinander elektrisch leitend miteinander verbunden. Zwischen den Schleifleitungsanordnungen 16, 22a, 22b und den betreffenden Schleifkörperanordnungen 18, 18a, 18b sind elektrische Schleifkontakte 17, 17a, 17b ausgebildet bzw. stehen die Schleifkörper- und Schleifleitungsanordnungen 18, 18a, 18b, 16, 22a, 22b mittels den Schleifkontakten 17, 17a, 17b in elektrischer Verbindung.

Eine andere nicht gezeigte Ausführung der einseitig ausfahrbaren Teleskopschubarme 11a, 11b, besteht in einer zur Fig. 7 alternativen Anordnung der Schleifkörper- und Schleifleitungsanordnung 18, 18a, 18b, 16, 22a, 22b. Dazu weist der Schlitten 15a, 15b auf seiner dem Tragrahmen 14a, 14b zugewandten Seite eine Schleifleitungsanordnung und der dem Tragrahmen 14a, 14b benachbarte, erste Zwischenschlitten 21a, 21b auf seinen dem Tragrahmen 14a, 14b und Schlitten 15a, 15b zugewandten Seiten jeweils eine Schleifleitungsanordnung auf. Der Tragrahmen 14a, 14b dagegen, ist im in Ausfahrrichtung - gemäß Pfeil 19a - betrachtet, vorderen Endbereich 27b mit einer Schleiflcörperanordnung und der dem Schlitten 15a, 15b benachbarte, zweite Zwischenschlitten 26a, 26b auf seiner dem Tragrahmen 14a, 14b zugewandten Seite im in Ausfahrrichtung - gemäß Pfeil 19a - gegenüberliegenden, hinteren Endbereich und auf seiner dem Schlitten 15a, 15b zugewandten Seite im in Ausfahrrichtung - gemäß Pfeil 19a - betrachtet, vorderen Endbereich mit je einer Schleifkörperanordnung versehen, wobei zwischen einer Schleifleitungsanordnung und einer betreffenden Schleifkörperanordnung ein elektrischer Schleifkontakt ausgebildet ist. Die Schleifleitungsanordnungen am ersten Zwischenschlitten 21a, 21b als auch die Schleiflcörperanordnungen am zweiten Zwischenschlitten 26a, 26b sind jeweils untereinander elektrisch leitend miteinander verbunden.

Die Ausführungsform nach der Fig. 8 unterscheidet sich von jener nach Fig. 7 nur dadurch, dass die Teleskopschubarme 11a, 11b in Bezug auf die Hubplattform 8 nach beide Richtungen ausfahrbar sind und der dem Tragrahmen 14a, 14b benachbarte, erste Zwischenschlitten 21a, 21b auf seinen dem Tragrahmen 14a, 14b und Schlitten 15a, 15b zugewandten Seiten jeweils in gegenüberliegenden, stirnseitigen Endbereichen 24a, 24b mit je einer Schleifkörperanordnung 18, 18a, 18c, 18d sowie der Schlitten 15a, 15b jeweils in gegenüberliegenden, stirnseitigen Endbereichen 25a, 25b mit je einer Schleiflcörperanordnung 18b, 18e versehen sind.

Wie in dieser Fig. eingetragen, ist zwischen einer Schleifleitungsanordnung 16, 22a, 22b und einer Schleifkörperanordnung 18, 18a, 18b jeweils ein elektrischer Schleifkontakt 17, 17a, 17b ausgebildet, wenn die Teleskopschubarme 11a, 11b nach rechts - gemäß Pfeil 19a - in das Regallager 3b ausgefahren werden. Werden die Teleskopschubarme 11a, 11b, wie nicht weiters dargestellt, nach links - gemäß Pfeil 19b - in das Regallager 3a ausgefahren, ist zwischen einer Schleifleitungsanordnung 16, 22a, 22b und einer Schleifkörperanordnung 18c, 18d, 18e jeweils ein elektrischer Schleifkontakt 17c, 17d, 17e ausgebildet.

Eine andere nicht gezeigte Ausführung der beidseitig ausfahrbaren Teleskopschubarme 11a, 11b, besteht in einer zur Fig. 8 alternativen Anordnung der Schleifleitungs- und Schleifkörperanordnung 16, 22a, 22b, 18 bis 18e. Dazu weist der Schlitten 15a, 15b auf seiner dem Tragrahmen 14a, 14b zugewandten Seite eine Schleifleitungsanordnung und der dem Tragrahmen 14a, 14b benachbarte, erste Zwischenschlitten 21a, 21b auf seinen dem Tragrahmen 14a, 14b und Schlitten 15a, 15b zugewandten Seitenjeweils eine Schleifleitungsanordnung auf. Der Tragrahmen 14a, 14b dagegen, ist in gegenüberliegenden, stirnseitigen Endbereichen 27a, 27b jeweils mit einer Schleifkörperanordnung und der dem Schlitten 15a, 15b benachbarte, zweite Zwischenschlitten 26a, 26b auf seinen dem Tragrahmen 14a, 14b und Schlitten 15a, 15b zugewandten Seiten jeweils in gegenüberliegenden, stirnseitigen Endbereichen mit je einer Schleifkörperanordnung versehen, wobei jeweils zwischen einer Schleifleitungsanordnung und einer Schleifkörperanordnung ein elektrischer Schleifkontakt ausgebildet ist. Die Schleifleitungsanordnungen am ersten Zwischenschlitten 21a, 21b als auch die Schleifkörperanordnungen am zweiten Zwischenschlitten 26a, 26b sind jeweils untereinander elektrisch leitend miteinander verbunden.

Fig. 9 zeigt eine bevorzugte Ausführung eines auf der durch strichpunktierte Linien nur schematisch angedeuteten Hubplattform 8 angeordneten Teleskopschubarmes 11a, 11b der Lastaufnahmevornchtung 9, in Stirnansicht geschnitten. Der Teleskopschubarm 11a weist, wie oben beschrieben, den Tragrahmen 14a, den ersten und zweiten Zwischenschlitten 21a, 26a und den äußeren Schlitten 15a auf. Der Tragrahmen 14a umfasst einen etwa C-förnügen Führungsteil 29a, einen Rahmenteil 30a und eine an diesem befestigte Halterung 34a. Der Rahmenteil 30a ist seinerseits auf der Hubplattform 8 befestigt. Der Führungsteil 29a besitzt eine Linearführung, sodass auf dem Tragrahmen 14a der in Längsrichtung auf der Linearführung verschiebbare, erste Zwischenschlitten 21a geführt ist. Die zur Ein- und Ausfahrrichtung des Teleskopschubarmes 11a parallel verlaufende Linearführung umfasst, wie in dieser Fig. ersichtlich, zwei voneinander getrennte Höhen- und/oder Seitenführungsbahnen 32a, 32b, die beispielsweise als Gleitführung ausgeführt sind. An der profilartigen Halterung 34a vom Tragrahmen 14a ist auf einer dem ersten Zwischenschlitten 21a zugewandten Seite, die Schleifleitungsanordnung 16 angeordnet, die parallel zur Ein- und Ausfahrrichtung des Teleskopschubarmes 11a verläuft.

Der am Tragrahmen 14a verschiebbar gerührte, im Querschnitt etwa I-förmige, erste Zwischenschlitten 21a, umfasst einen Führungsteil 35a und eine an diesem befestigte, etwa L-förmige Halterung 36a. Der Führungsteil 35a besitzt zwei voneinander getrennte Linearführungen, eine für die Führung des ersten Zwischenschlittens 21a am Tragrahmen 14a und die andere für die Führung des zweiten Zwischenschlittens 26a am ersten Zwischenschlittens 21a. Der zweite Zwischenschlitten 26a ist somit in Längsrichtung auf einer der Linearführungen verschiebbar am ersten Zwischenschlitten 21a geführt. Die zur Ein- und Ausfahrrichtung des Teleskopschubarmes 11a parallel verlaufenden Linearführungen umfassen, wie in dieser Fig. ersichtlich, jeweils zwei voneinander getrennte Höhen- und/oder Seitenführungsbahnen 37a, 37b, 38a, 38b, die beispielsweise als Gleitführung ausgeführt sind. An der profilartigen Halterung 36a, insbesondere am aufragenden Schenkel, vom ersten Zwischenschlitten 21a ist auf einer der Halterung 34a vom Tragrahmen 14a zugewandten Seite, die Schleifkörperanordnung 18 und auf einer der Halterung 34a vom Tragrahmen 14a abgewandten Seite, die Schleifkörperanordnung 18a befestigt. Die Schleifkörperanordnungen 18, 18a verlaufen parallel zur Ein- und Ausfahrrichtung des Teleskopschubarmes 11a.

Der zweite Zwischenschlitten 26a umfasst zwei übereinander angeordnete und voneinander abgewandte, etwa C-förmige Führungsteile 40a, 40b und eine am oberen Führungsteil 40a befestigte, etwa L-förmige Halterung 41a. Die Führungsteile 40a, 40b besitzen jeweils zwei voneinander getrennte Linearführungen, eine für die Führung des zweiten Zwischenschlittens 26a am ersten Zwischenschlittens 21a und die andere für die Führung des äußeren Schlittens 15a am zweiten Zwischenschlittens 26a. Der äußeren Schlittens 15a ist somit in Längsrichtung auf einer der Linearführungen verschiebbar am zweiten Zwischenschlitten 26a geführt. Die parallel zur Ein- und Ausfahrrichtung des Teleskopschubarmes 11a verlaufenden Linearführungen umfassen, wie in dieser Fig. ersichtlich, zwei voneinander getrennte Höhen- und/oder Seitenführungsbahnen 42a, 42b, 43a, 43b, die beispielsweise als Gleitführung ausgeführt sind. An der profilartigen Halterung 41a, insbesondere am aufragenden Schenkel, vom zweiten Zwischenschlitten 26a, ist auf einer der Halterung 34a vom Tragrahmen 14a zugewandten Seite, die Schleifleitungsanordnung 22a und auf einer der Halterung 34a vom Tragrahmen 14a abgewandten Seite, die Schleifleitungsanordnung 22b befestigt. Die Schleifleitungsanordnungen 22a, 22b verlaufen parallel zur Ein- und Ausfahrrichtung des Teleskopschubarmes 11a.

Der äußere Schlitten 15a umfasst einen Führungsteil 44a und eine an diesem befestigte, im wesentlichen ebene, profilartige Halterung 45a. Der Führungsteil 43a besitzt eine Linearführung für die Führung des Schlittens 15a-am zweiten Zwischenschlitten 26a. Der Schlitten 15a ist somit in Längsrichtung mittels der Linearführung verschiebbar am zweiten Zwischenschlitten 26a geführt. Die parallel zur Ein- und Ausfahrrichtung des Teleskopschubarmes 11a verlaufende Linearführung umfasst, wie in dieser Fig. ersichtlich, jeweils zwei voneinander getrennte Höhen- und/oder Seitenführungsbahnen 47a, 47b, die beispielsweise als Gleitführung ausgeführt sind. An der Halterung 45a vom ersten Zwischenschlitten 21a, ist auf einer der Halterung 34a vom Tragrahmen 14a zugewandten Seite, die Schleiflcörperanordnung 18b befestigt. Diese Schleiflcörperanordnung 18b verläuft parallel zur Ein- und Ausfahrrichtung des Teleskopschubarmes 11a.

Die Schleifleitungsanordnungen 16, 22a, 22b und Schleiflcörperanordnungen 18, 18a, 18b bilden das beschriebene Übertragungsmittel 20, wobei nach dieser Ausführung zwischen der betreffenden Schleifleitungsanordnung 16, 22a, 22b und Schleifkörperanordnung 18 eine Vielzahl von elektrischen Schleifkontakte 17, 17a, 17b, beispielsweise zehn, ausgebildet sind.

Die Schleifleitungsanordnungen 16, 22a, 22b; 23 bestehen aus einem Isolierstoffgrundkörper 53, vorzugsweise Kunststoff, und mindestens einer elektrisch leitenden Schleifleitung 54 in Form einer Metallschiene und dgl.. Die Schleifkörperanordnungen 18, 18a, 18b; 18c bis 18e bestehen aus mindestens einem elektrisch leitfähigen Schleifkörper 55 in Form einer federbetätigten Schleifkohle und dgl.. Zweckmäßig sind mehrere parallel nebeneinander liegende Schleifleitungen 54 für Motorströme, Steuerströme und Datenübertragungssignale ausgebildet, entlang welcher mehrere Schleifkörper 55 über den gesamten Ein- und Ausfahrweg des Teleskopschubarmes 11a, 11b gleiten. Ein Schleifkontakt 17, 17a, 17b wird dadurch hergestellt, dass ein Schleifkörper 55 gegen eine Schleifleitung 54 angepresst wird. Beispielsweise sind zehn Schleifleitungen 54 je Schleifleitungsanordnung 16, 22a, 22b; 23 und zehn Schleifkörper 55 je Schleifkörperanordnung 18, 18a, 18b; 18c bis 18e vorgesehen.

Wie nicht weiters dargestellt, sind die Schleiflcörperanordnungen 18 und 18a sowie die Schleifleitungsanordnungen 22a und 22b elektrisch leitend miteinander verbunden, wobei die Schleifleitungsanordnung 16 die Schleifkörperanordnung 18, die Schleifkörperanordnung 18a die Schleifleitungsanordnung 22a, die Schleifleitungsanordnung 22a die Schleifleitungsanordnung 22b und die Schleifleitungsanordnung 22b die Schleifkörperanordnung 18b mit elektrischer Energie versorgt und/oder auf diese die Signale überträgt. Die Schleifkörperanordnung 18b ist wiederum mit den in Fig. 7 eingetragenen Aktuatoren 50a bis 50d und/oder dem Sensor 51 verbunden. Die Schleifleitungsanordnung 16, ist mit der schematisch dargestellten Schnittstelle 52 verbunden, wie durch die Verbindungslinie schematisch angedeutet.

Wie schon die Fig. 9 erkennen lässt, ist der Teleskopschubarm 11a, 11b sehr kompakt aufgebaut und kann deshalb der zwischen zwei im Regallager 3a, 3b, wie in Fig. 1 dargestellt, nebeneinander abgestellten Ladehilfsmitteln 12 benötigte Spaltabstand 56 schmal ausgelegt werden.

Zusätzlich ist von Vorteil, dass die Schleifleitungs- und Schleiflcörperanordnungen 16, 22a, 22b; 23, 18 bis 18b; 18c bis 18d des Übertragungsmittels 20 auf der von der Hubplattform 8 abgewandten Seite oberhalb oder auf der von der Hubplattform 8 zugewandten Seite unterhalb des Teleskopschubarmes 11a, 11b, insbesondere Zwischenschlitten 21a, 21b und/oder Zwischenschlitten 26a, 26b und/oder Schlitten 15a, 15b, angeordnet sind, sodass eine sehr schmal gehaltene Breite der Teleskopschubarme 11a, 11b beibehalten werden kann und durch die Anordnung des Übertragungsmittels 20 die Teleskopschubarme 11a, 11b nicht verbreitert werden müssen. Dies ist insofern möglich, als dass die Übertragungsmittel 20 der Teleskopschubarme 11a, 11b an den ohnehin seitlich neben dem durch die Raumhöhe des zu transportierenden Ladehilfsmittels 12 vorgegebenen Freiräumen platziert werden können, entweder oberhalb oder unterhalb des betreffenden Teleskopschubarmes 11a, 11b.

Eine andere Anordnung der Schleifleitungsanordnungen 16, 22a, 22b und Schleifkörperanordnungen 18, 18a, 18b des Übertragungsmittels 20 ist in Fig. 10 gezeigt. Wie ersichtlich, ist die zumindest eine Schleifkörperanordnung 18 auf der dem ersten Zwischenschlitten 21a zugewandten Seite am C-förmigen Führungsteil 29a des Tragrahmens 14a befestigt. Die Schleifleitungsanordnung 16 ist auf der dem Tragrahmen 14a zugewandten Seite am Führungsteil 35a des ersten Zwischenschlittens 21a befestigt.

Die Schleifleitungsanordnung 22a ist auf der dem zweiten Zwischenschlitten 26a zugewandten Seite am Führungsteil 35a des ersten Zwischenschlittens 21a befestigt. Die Schleifkörperanordnung 18a ist auf der dem Tragrahmen 14a zugewandten Seite am C-förmigen Führungsteil 40a des zweiten Zwischenschlittens 26a befestigt. Am weiteren, C-förmigen Führungsteil 40b des zweiten Zwischenschlittens 26a ist auf der dem äußeren Schlitten 15a, 15b zugewandten Seite, die Schleifleitungsanordnung 22b befestigt.

Die Schleifkörperanordnung 18b ist auf der dem Tragrahmen 14a zugewandten Seite am Führungsteil 44a des Schlittens 15a befestigt.

Die Schleifleitungsanordnungen 16, 22a sind elektrisch miteinander verbunden. Ebenso sind die Schleifkörperanordnung 18a und Schleifleitungsanordnung 22b elektrisch miteinander verbunden. Die Schleifkörperanordnung 18 ist an der nicht dargestellten Schnittstelle 52 angeschlossen.

Die Ausführung nach Fig. 10 ist von Vorteil, da das Übertragungsmittel 20 weitestgehend geschützt vor äußeren Sclunutzeinwirkungen bleibt und deshalb eine hohe Funktionssicherheit des Teleskopschubarmes 11a, 11b erreicht wird.

Es sei an dieser Stelle hingewiesen, dass die Schleifkörper 55 als federbetätigte Schleifkohlen und dgl. ausgebildet sind. Durch beiderseitige Einlaufschrägen an den Schleifleitungen und den angeschrägten, federnd gelagerten Schleifkörpern 55 der Schleiflcörperanordnungen 18; 18a bis 18e, wird ein sicheres und stoßarmes Aus- und Einfahren der Schleifkörperanordnungen 18; 18a bis 18e aus und in die Schleifleitungsanordnungen 16, 22a, 22b; 23 ermöglicht. Die Schleifleitungsanordnungen 16, 22a, 22b; 23 sind nach einer Seite offen und stehen mit den Schleiflcörperanordnungen 18; 18a bis 18e, insbesondere den Schleifkörpern 55, in elektrischen Kontakt. Sie bestehen jeweils aus mindestens einer elektrisch leitenden Schleifleitung 54, die auf die gleiche Länge des jeweiligen Zwischenschlittens 21a, 21b; 26a, 26b und Schlittens 15a, 15b oder Tragrahmens 14a, 14b abgestimmt und elektrisch isoliert ist.

In einer weiteren Ausgestaltung sind die Schleifkörperanordnungen 18; 18a bis 18e um ihre Symmetrieachse jeweils mit linken und rechten Schleifkörper 55 doppelt ausgeführt, womit eine sichere Kontaktierung zwischen Schleifleitung 54 und Schleifkörper 55 und Energieübertragung erreicht wird, selbst wenn einer der Schleifkörper 55 durch reibungsbedingte Abnutzung verschlissen ist.

Die oben beschriebene Schleifleitungsanordnung 16, 22a, 22b; 23 bildet ein Stromzuführelement und die Schleifkörperanordnung 18; 18a bis 18e einen Stromabnehmer aus.

Der Antrieb der Zwischenschlitten 21a, 21b; 26a, 26b und des äußeren Schlittens 15a, 15b eines Teleskopschubarmes 11a, 11b erfolgt beispielsweise mittels nicht gezeigten Zugmitteltrieben, insbesondere Riementrieben, wobei auf einen der Zwischenschlitten 21a, 21b, 26a, 26b eine Antriebskraft eingeleitet und mittels den Zugmitteltrieben auf den weiteren Zwischenschlitten 21a, 21b; 26a, 26b und äußeren Schlitten 15a, 15b übertragen wird. Ein mögliches Antriebskonzept für die Ausführung nach Fig. 5 ist aus der US 2003/0185656 A1 bekannt und wird die diesbezügliche, detaillierte Offenbarung zum Gegenstand dieser Offenbarung gemacht. Dabei sind der Tragrahmen 14a, 14b und äußere Schlitten 15a, 15b über zwei Riemen miteinander gekoppelt. Die Riemen sind jeweils um, in dem in Ausfahrrichtung - gemäß Pfeil 19a, 19b - des Teleskopschubarmes 11a, 11b vorderen Endbereich des Zwischenschlittens 21a, 21b gelagerte Rollen umgelenkt sowie mit ihren ersten freien Enden am Tragrahmen 14a, 14b und ihren zweiten freien Enden am äußeren Schlitten 15a, 15b befestigt. Der Zwischenschlitten 21a, 21b ist angetrieben.

Abschließend sei noch darauf hingewiesen, dass die Übertragung der Energie und/oder Signale nicht nur von der Schnittstelle 52 zu den Aktuatoren 50a bis 50e und/oder Sensoren erfolgen kann, sondern auch von den Aktuatoren 50a bis 50e und/oder Sensoren zur Schnittstelle 52. Es ist somit eine bidirektionale Übertragung der Energie und/oder Signale möglich.

Der Ordnung halber sei abschließend darauf hingewiesen, dass zum besseren Verständnis des Aufbaus des Teleskopschubarmes 11a, 11b dieser bzw. dessen Bestandteile teilweise unmaßstäblich und/oder vergrößert und/oder verkleinert dargestellt wurden.

### Bezugszeichenaufstellung

- 1: Lagersystem
- 2: Gasse
- 3a: Regallager
- 3b: Regallager
- 4: Schiene
- 5: Doppelpfeil
- 6: Regalbediengerät
- 7: Mast
- 8: Hubplattform
- 9: Lastaufnahmevorrichtung
- 10: Doppelpfeil

- 11a: Teleskopschubarm
- 11b: Teleskopschubarm
- 12: Ladehilfsmittel
- 13a: Mitnehmerelement
- 13b: Mitnehmerelement
- 13c: Mitnehmerelement
- 13d: Mitnehmerelement
- 13e: Mitnehmerelement
- 13f: Mitnehmerelement
- 14a: Tragrahmen
- 14b: Tragrahmen
- 15a: Schlitten
- 15b: Schlitten

- 16: Schleifleitungsanordnung
- 17: Schleifkontakt
- 17a: Schleifkontakt
- 17b: Schleifkontakt
- 18: Schleifkörperanordnung
- 18a: Schleifkörperanordnul1g
- 18b: Schleifkörperanordnung
- 18c: Schleifkörperanordnung
- 18d: Schleifkörperanordnung
- 18e: Schleifkörperanordnung
- 19a: Ausfahrrichtung
- 19b: Ausfahrrichtung
- 20: Übertragungsmittel

- 21a: Zwischenschlitten
- 21b: Zwisclienschlitten
- 22a: Sclileifleitungsanordnung
- 22b: Schleifleitungsanordnung
- 23: Schleifleitungsanordnung

- 24a: Endbereich Zwischenschlitten
- 24b: Endbereich Zwischenschlitten
- 25a: Endbereich Schlitten
- 25b: Endbereich Schlitten
- 26a: Zwischenschlitten
- 26b: Zwischenschlitten
- 27a: Endbereich Tragrahmen
- 27b: Endbereich Tragrahmen
- 28a: Endbereich Zwischenschlitten
- 28b: Endbereich Zwischenschlitten
- 29a: Fürungsteil

- 30a: Rahmenteil
- 32a: Höhen- und/oder Seitenführungsbahn
- 32b: Höhen- und/oder Seitenführungsbahn
- 34a: Halterung
- 35: Führungsteil
- 36a: Halterung
- 37a: Höhen- und/oder Seitenführungsbahn
- 37b: Höhen- und/oder Seitenführungsbahn
- 38a: Höhen- und/oder Seitenführungsbahn
- 38b: Höhen- und/oder Seitenführungsbahn
- 40a: Führungsteil
- 40b: Führungsteil

- 41a: Halterung
- 42a: Höhen- und/oder Seitenfühningsbahn
- 42b: Höhen- und/oder Seitenführungsbahn
- 43a: Höhen- und/oder Seitenführungsbahn
- 43b: Höhen- und/oder Seitenführungsbahn
- 44a: Führungsteil
- 45a: Halterung
- 46: Länge Schleifleitungsanordnung
- 48: Länge Schleifkontakt
- 50a: Aktuator
- 50b: Aktuator
- 50c: Aktuator
- 50d: Aktuator

- 51: Sensor
- 52: Schnittstelle
- 53: Isoliergrundstoffkörper
- 54: Schleifleitung
- 55: Schleifkörper
- 56: Spaltabstand
- 57a: Seitenwand
- 57b: Seitenwand

## Patentansprüche

1. Teleskopschubarm (11a, 11b) für eine auf einer vertikal und/oder horizontal verstellbaren Hubplattform (8) eines Förderfahrzeuges angeordnete Lastaufnahmevorrichtung (9) zum Ein- bzw. Auslagern eines Ladehilfsmittels (12) in ein bzw. aus einem Regallager (3a, 3b), mit einem Tragrahmen (14a, 14b) und wenigstens einem zu diesem relativ verstellbaren Schlitten (15a, 15b), welcher Schlitten (15a, 15b) in Bezug auf den Tragrahmen (14a, 14b) nach eine Richtung ausfahrbar und mit zumindest einem Stellantrieb (50a bis 50d) und/oder zumindest einem Sensor (51) versehen ist, wobei der Stellantrieb (50a bis 50d) und/oder Sensor (51) über ein Übertragungsmittel (20) für elektrische Energie und/oder elektrische Signale mit einer im Bereich des Tragrahmens (14a, 14b) angeordneten, elektrischen Schnittstelle (52) verbunden ist, **dadurch gekennzeichnet, dass** das Übertragungsmittel (20) für elektrische Energie und/oder elektrische Signale durch wenigstens eine Schleifleitungsanordnung (16; 22a, 22b; 23) und wenigstens eine Schleifkörperanordnung (18; 18a; 18b) gebildet ist, wobei die Schleifleitungsanordnung (16; 22a, 22b; 23) und Schleiflcörperanordnung (18; 18a; 18b) zwischen dem Tragrahmen (14a, 14b) und Schlitten (15a, 15b) angeordnet sind und dass zur Energie- und/oder Signalübertragung von der Schnittstelle (52) zum Stellantrieb (50a bis 50d) und/oder Sensor (51) und gegebenenfalls umgekehrt zwischen der Schleifleitungsanordnung (16; 22a, 22b; 23) und Schleiflcörperanordnung (18; 18a; 18b) wenigstens ein elektrischer Schleifkontakt (17; 17a; 17b) ausgebildet ist.

2. Teleskopschubarm nach Anspruch 1, **dadurch gekennzeichnet, dass** die Schleifleitungsanordnung (16) am Tragrahmen (14a, 14b) und die Schleifkörperanordnung (18) am Schlitten (15a, 15b) angeordnet sind.

3. Teleskopschubarm nach Anspruch 1, **dadurch gekennzeichnet, dass** die Schleifleitungsanordnung (16) am Schlitten (15a, 15b) und die Schleifkörperanordnung (18) am Tragrahmen (14a, 14b) angeordnet sind.

4. Teleskopschubarm nach Anspruch 1 oder 2, **dadurch gekennzeichnet, dass** der Schlitten (15a, 15b) in seinem in Ausfahrrichtung (19a; 19b) gegenüberliegenden Endbereich (25a; 25b) mit der Schleifkörperanordnung (18) versehen ist.

5. Teleskopschubarm nach Anspruch 1 oder 3, **dadurch gekennzeichnet, dass** der Tragrahmen (14a, 14b) zumindest in seinem in Ausfahrrichtung (19a; 19b) des Schlittens (15a, 15b) betrachtet, vorderen Endbereich (27a; 27b) mit der Schleifkörperanordnung (18) versehen ist.

6. Teleskopschubarm nach Anspruch 1, **dadurch gekennzeichnet, dass** wenigstens ein Zwischenschlitten (21a, 21b) zwischen dem Tragrahmen (14a, 14b) und dem Schlitten (15a, 15b) angeordnet ist, wobei der Schlitten (15a, 15b) und Zwischenschlitten (21a, 21b) relativ zum Tragrahmen (14a, 14b) verstellbar und der Schlitten (15a, 15b) und Zwischenschlitten (21a, 21b) relativ zueinander verstellbar sind, wobei der Zwischenschlitten (21a, 21b), Schlitten (15a, 15b) und Tragrahmen (14a, 14b) untereinander geführt sind und dass zwischen dem Tragrahmen (14a, 14b) und Zwischenschlitten (21a, 21b) eine erste Schleifleitungsanordnung (16; 22a) und eine erste Schleiflcörperanordnung (18) sowie zwischen dem Schlitten (15a, 15b) und Zwischenschlitten (21a, 21b) eine zweite Schleifleitungsanordnung (22b) und eine weitere Schleiflcörperanordnung (18a) angeordnet sind.

7. Teleskopschubarm nach Anspruch 6, **dadurch gekennzeichnet, dass** der Zwischenschlitten (21a, 21b) auf seinen dem Tragrahmen (14a, 14b) und Schlitten (15a, 15b) zugewandten Seiten jeweils eine Schleifleitungsanordnung (22a, 22b) aufweisen und dass der Schlitten (15a, 15b) in seinem in Ausfahrrichtung (19a; 19b) gegenüberliegenden Endbereich (25a; 25b) und der Tragrahmen (14a, 14b) in seinem in Ausfahrrichtung (19a; 19b) des Schlittens (15a, 15b) betrachtet, vorderen Endbereich (27a; 27b) jeweils mit einer Schleifkörperanordnung (18a, 18) versehen sind, wobei jeweils zwischen einer Schleifleitungsanordnung (22a, 22b) und einer Schleifkörperanordnung (18a, 18) ein elektrischer Schleifkontakt (17a, 17) ausgebildet ist und die Schleifleitungsanordnungen (22a, 22b) am Zwischenschlitten (21a, 21b) elektrisch leitend miteinander verbunden sind.

8. Teleskopschubarm nach Anspruch 6, **dadurch gekennzeichnet, dass** der Tragrahmen (14a, 14b) und Schlitten (15a, 15b) auf einander zugewandten Seiten je eine Schleifleitungsanordnung (16, 23) aufweisen und dass der Zwischenschlitten (21a, 21b) auf seiner dem Tragrahmen (14a, 14b) zugewandten Seite im in Ausfahrrichtung (19a; 19b) des Schlittens (15a, 15b) gegenüberliegenden Endbereich (24a; 24b) und auf seiner dem Schlitten (15a, 15b) zugewandten Seite im in Ausfahrrichtung (19a; 19b) des Schlittens (15a, 15b) zugewandten Endbereich (24a; 24b) mit je einer Schleifkörperanordnung (18, 18a) versehen sind, wobei jeweils zwischen einer Schleifleitungsanordnung (16, 23) und einer Schleifkörperanordnung (18, 18a) ein elektrischer Schleifkontakt (17, 17a) ausgebildet ist und die Schleifkörperanordnungen (18, 18a) am Zwischenschlitten (21a, 21b) elektrisch leitend miteinander verbunden sind.

9. Teleskopschubarm nach Anspruch 1, **dadurch gekennzeichnet, dass** zwei Zwischenschlitten (21a, 21b, 26a, 26b) zwischen dem Tragrahmen (14a, 14b) und dem Schlitten (15a, 15b) angeordnet sind, wobei die Zwischenschlitten (21a, 21b, 26a, 26b) relativ zum Tragrahmen (14a, 14b) und der Schlitten (15a, 15b) und Zwischenschlitten (21a, 21b, 26a, 26b) relativ zueinander verstellbar sind, wobei die Zwischenschlitten (21a, 21b, 26a, 26b), der Schlitten (15a, 15b) und der Tragrahmen (14a, 14b) untereinander gerührt sind und dass zwischen dem Tragrahmen (14a, 14b) und ersten Zwischenschlitten (21a, 21b) eine erste Schleifleitungsanordnung (16) und eine erste Schleifkörperanordnung (18) und zwischen dem ersten und zweiten Zwischenschlitten (21a, 21b) eine zweite Schleifleitungsanordnung (22a) und eine zweite Schleifkörperanordnung (18a) sowie zwischen dem zweiten Zwischenschlitten (21a, 21b) und Schlitten (15a, 15b) eine dritte Schleifleitungsanordnung (22b) und eine dritte Schleifkörperanordnung (18b) angeordnet sind.

10. Teleskopschubarm nach Anspruch 9, **dadurch gekennzeichnet, dass** der Tragrahmen (14a, 14b) die Schleifleitungsanordnung (16) und der dem Schlitten (15a, 15b) benachbarte, zweite Zwischenschlitten (26a, 26b) auf seinen dem Tragrahmen (14a, 14b) und Schlitten (15a, 15b) zugewandten Seiten jeweils eine Schleifleitungsanordnung (22a, 22b) aufweisen und dass der dem Tragrahmen (14a, 14b) benachbarte, erste Zwischenschlitten (21a, 21b) auf seiner dem Tragrahmen (14a, 14b) zugewandten Seite im in Ausfahrrichtung (19a; 19b) gegenüberliegenden Endbereich (24a; 24b) und auf seiner dem Schlitten (15a, 15b) zugewandten Seite im in Ausfahrrichtung (19a; 19b) betrachtet, vorderen Endbereich (24a; 24b) mit je einer Schleifkörperanordnung (18, 18a) und der Schlitten (15a, 15b) im in seiner Ausfahrrichtung (19a; 19b) gegenüberliegenden Endbereich (25a; 25b) mit einer Schleifkörperanordnung (18b) versehen sind, wobei jeweils zwischen einer Schleifleitungsanordnung (16, 22a, 22b) und einer Schleifkörperanordnung (18, 18a, 18b) ein elektrischer Schleifkontakt (17, 17a, 1 7b) ausgebildet ist und die Schleifkörperanordnungen (18, 18a) am ersten Zwischenschlitten (21a, 21b) als auch die Schleifleitungsanordnungen (16, 22a, 22b) am zweiten Zwischenschlitten (26a, 26b) jeweils elektrisch leitend miteinander verbunden sind.

11. Teleskopschubarm nach Anspruch 9, **dadurch gekennzeichnet, dass** der Schlitten (15a, 15b) auf seiner dem Tragrahmen (14a, 14b) zugewandten Seite die Schleifleitungsanordnung (16) und der dem Tragrahmen (14a, 14b) benachbarte, erste Zwischenschlitten (21a, 21b) auf seinen dem Tragrahmen (14a, 14b) und Schlitten (15a, 15b) zugewandten Seiten jeweils eine Schleifleitungsanordnung (22a, 22b) aufweisen und dass der Tragrahmen (14a, 14b) im in Ausfahrrichtung (19a; 19b) des Schlittens (15a, 15b) zugewandten Endbereich (27a; 27b) mit einer Schleifkörperanordnung (18) und der dem Schlitten (15a, 15b) benachbarte, zweite Zwischenschlitten (26a, 26b) auf seiner dem Tragrahmen (14a, 14b) zugewandten Seite im in Ausfahrrichtung (19a; 19b) des Schlittens (15, 15b) gegenüberliegenden Endbereich und auf seiner dem Schlitten (15a, 15b) zugewandten Seite im in Ausfahrrichtung (19a; 19b) des Schlittens (15a, 15b) betrachtet, vorderen Endbereich mit je einer Schleifkörperanordnung (18a, 18b) versehen sind, wobei jeweils zwischen einer Schleifleitungsanordnung (16, 22a, 22b) und einer Schleifkörperanordnung (18, 18a, 18b) ein elektrischer Schleifkontakt (17, 17a, 17b) ausgebildet ist und die Schleifleitungsanordnungen (22a, 22b) am ersten Zwischenschlitten (21a, 21b) als auch die Schleifkörperanordnungen (18a, 18b) am zweiten Zwischenschlitten (26a, 26b) jeweils elektrisch leitend miteinander verbunden sind.

12. Teleskopschubarm nach Anspruch 1, **dadurch gekennzeichnet, dass** der Schlitten (15a, 15b) in Bezug auf den Tragrahmen (14a, 14b) nach beide Richtungen ausfahrbar ist und das Übertragungsmittel (20) für elektrische Energie und/oder elektrische Signale durch wenigstens eine Schleifleitungsanordnung (16; 22a, 22b; 23) und wenigstens zwei in Ausfahrrichtung (19a, 19b) des Schlittens (15a, 15b) im Abstand baulich getrennt vorgesehene Schleifkörperanordnungen (18 bis 18e) gebildet ist, wobei die Schleifleitungsanordnung (16; 22a, 22b; 23) und Schleifkörperanordnungen (18 bis 18e) zwischen dem Tragrahmen (14a, 14b) und Schlitten (15a, 15b) angeordnet sind und der Abstand zwischen den Schleifkörperanordnungen (18 bis 18e) kleiner ist als die maximale Länge des Schlittens (15a, 15b) und/oder Tragrahmens (14a, 14b) und dass zur Energie- und/oder Signalübertragung von der Schnittstelle (52) zum Stellantrieb (50a bis 50f) und/oder Sensor (51) und gegebenenfalls umgekehrt zwischen der Schleifleitungsanordnung (16; 22a, 22b; 23) und einer Schleifkörperanordnung (18 bis 18e) wenigstens ein elektrischer Schleifkontakt (17, 17a, 17b) ausgebildet ist.

13. Teleskopschubarm nach Anspruch 12, **dadurch gekennzeichnet, dass** die Schleifleitungsanordnung (16) am Tragrahmen (14a, 14b) und die Schleifkörperanordnungen (18a, 18b) am Schlitten (15a, 15b) angeordnet sind.

14. Teleskopschubarm nach Anspruch 12, **dadurch gekennzeichnet, dass** die Schleifleitungsanordnung (16) am Schlitten (15a, 15b) und die Schleifkörperanordnungen (18a, 18b) am Tragrahmen (14a, 14b) angeordnet sind.

15. Teleskopschubarm nach Anspruch 12 oder 13, **dadurch gekennzeichnet, dass** der Schlitten (15a, 15b) an seinen einander gegenüberliegenden, stirnseitigen Endbereichen (25a, 25b) jeweils mit zumindest einer Schleifkörperanordnung (18a, 18b) versehen ist.

16. Teleskopschubarm nach Anspruch 12 oder 14, **dadurch gekennzeichnet, dass** der Tragrahmen (14a, 14b) an seinen einander gegenüberliegenden, stirnseitigen Endbereichen (27a, 27b) jeweils mit zumindest einer Schleifkörperanordnung (18a, 18b) versehen ist.

17. Teleskopschubarm nach Anspruch 12, **dadurch gekennzeichnet, dass** wenigstens ein Zwischenschlitten (21a, 21b) zwischen dem Tragrahmen (14a, 14b) und dem Schlitten (15a, 15b) angeordnet ist, wobei der Schlitten (15a, 15b) und Zwischenschlitten (21a, 21b) relativ zum Tragrahmen (14a, 14b) verstellbar und der Schlitten (15a, 15b) und Zwischenschlitten (21a, 21b) relativ zueinander verstellbar sind, wobei der Zwischenschlitten (21a, 21b), Schlitten (15a, 15b) und Tragrahmen (14a, 14b) untereinander geführt sind und dass zwischen dem Tragrahmen (14a, 14b) und Zwischenschlitten (21a, 21b) eine erste Schleifleitungsanordnung (22a) und zwei Schleifkörperanordnungen (18, 18c) sowie zwischen dem Schlitten (15a, 15b) und Zwischenschlitten (21a, 21b) eine zweite Schleifleitungsanordnung (22b) und zwei weitere Schleifkörperanordnungen (18a, 18b) angeordnet sind.

18. Teleskopschubarm nach Anspruch 17, **dadurch gekennzeichnet, dass** der Tragrahmen (14a, 14b) und Schlitten (15a, 15b) jeweils in seinen gegenüberliegenden, stirnseitigen Endbereichen (27a, 27b, 25a, 25b) mit je einer Schleifkörperanordnung (18, 18c, 18a, 18b) sowie der Zwischenschlitten (21a, 21b) auf seinen dem Tragrahmen (14a, 14b) und Schlitten (15a, 15b) zugewandten Seiten mit jeweils einer Schleifleitungsanordnung (22a, 22b) versehen sind, wobei jeweils zwischen einer Schleifleitungsanordnung (22a, 22b) und einer Schleifkörperanordnung (18, 18c, 18a, 18b) wenigstens ein elektrischer Schleifkontakt (17, 17a) ausgebildet ist und die Schleifleitungsanordnungen (22a, 22b) am Zwischenschlitten (21a, 21b) elektrisch leitend miteinander verbunden sind.

19. Teleskopschubarm nach Anspruch 17, **dadurch gekennzeichnet, dass** der Tragrahmen (14a, 14b) und Schlitten (15a, 15b) auf einander zugewandten Seiten jeweils mit einer Schleifleitungsanordnung (22a, 22b) sowie der Zwischenschlitten (21a, 21b) auf seinen dem Tragrahmen (14a, 14b) und Schlitten (15a, 15b) zugewandten Seiten jeweils in gegenüberliegenden, stirnseitigen Endbereichen (24a, 24b) mit je einer Schleifkörperanordnung (18, 18c, 18a, 18b) versehen sind, wobei jeweils zwischen einer Schleifleitungsanordnung (22a, 22b) und einer Schleifkörperanordnung (18, 18c, 18a, 18b) ein elektrischer Schleifkontakt (17, 17a) ausgebildet ist und die Schleifkörperanordnungen (18, 18c, 18a, 18b) elektrisch leitend miteinander verbunden sind.

20. Teleskopschubarm nach Anspruch 12, **dadurch gekennzeichnet, dass** zwei Zwischenschlitten (21a, 21b, 26a, 26b) zwischen dem Tragrahmen (14a, 14b) und dem Schlitten (15a, 15b) angeordnet sind, wobei die Zwischenschlitten (21a, 21b, 26a, 26b) relativ zum Tragrahmen (14a, 14b) und der Schlitten (15a, 15b) und die Zwischenschlitten (21a, 21b, 26a, 26b) relativ zueinander verstellbar sind, wobei die Zwischenschlitten (21a, 21b, 26a, 26b), der Schlitten (15a, 15b) und der Tragrahmen (14a, 14b) untereinander geführt sind und dass zwischen dem Tragrahmen (14a, 14b) und ersten Zwischenschlitten (21a, 21b) eine erste Schleifleitungsanordnung (16) und zwei erste Schleifkörperanordnungen (18, 18,) und zwischen dem ersten und zweiten Zwischenschlitten (21a, 21b, 26a, 26b) eine zweite Schleifleitungsanordnung (22a) und zwei zweite Schleifkörperanordnungen (18a, 18c) sowie zwischen dem zweiten Zwischenschlitten (26a, 26b) und Schlitten (15a, 15b) eine dritte Schleifleitungsanordnung (22b) und zwei dritte Schleifkörperanordnungen (18b, 18e) angeordnet sind.

21. Teleskopschubarm nach Anspruch 20, **dadurch gekennzeichnet, dass** der Tragrahmen (14a, 14b) die Schleifleitungsanordnung (16) und der dem Schlitten (15a, 15b) benachbarte, zweite Zwischenschlitten (26a, 26b) auf seinen dem Tragrahmen (14a, 14b) und Schlitten (15a, 15b) zugewandten Seiten jeweils eine Schleifleitungsanordnung (22a, 22b) aufweisen und dass der dem Tragrahmen (14a, 14b) benachbarte, erste Zwischenschlitten (21a, 21b) auf seinen dem Tragrahmen (14a, 14b) und Schlitten (15a, 15b) zugewandten Seiten jeweils in gegenüberliegenden, stirnseitigen Endbereichen (24a, 24b) mit je einer Schleifkörperanordnung (18, 18d) und der Schlitten (15a, 15b) jeweils in gegenüberliegenden, stirnseitigen Endbereichen (25a, 25b) mit je einer Schleifkörperanordnung (18b, 18e) versehen sind, wobei jeweils zwischen einer Schleifleitungsanordnung (16, 22a, 22b) und einer Schleifkörperanordnung (18, 18 a bis 18e) ein elektrischer Schleifkontakt (17, 17a, 17b) ausgebildet ist und die Schleifkörperanordnungen (18, 18a, 18c, 18d) am ersten Zwischenschlitten (21a, 21b) als auch die Schleifleitungsanordnungen (22a, 22b) am zweiten Zwischenschlitten (26a, 26b) jeweils elektrisch leitend miteinander verbunden sind.

22. Teleskopschubarm nach Anspruch 20, **dadurch gekennzeichnet, dass** der Schlitten (15a, 15b) auf seiner dem Tragrahmen (14a, 14b) zugewandten Seite die Schleifleitungsanordnung (16) und der dem Tragrahmen (14a, 14b) benachbarte, erste Zwischenschlitten (21a, 21b) auf seinen dem Tragrahmen (14a, 14b) und Schlitten (15a, 15b) zugewandten Seiten jeweils eine Schleifleitungsanordnung (22a, 22b) aufweisen und dass der Tragrahmen (14a, 14b) jeweils in gegenüberliegenden, stirnseitigen Endbereichen (27a, 27b) mit je einer Schleifkörperanordnung (18, 18d) und der dem Schlitten (15a, 15b) benachbarte, zweite Zwischenschlitten (26a, 26b) auf seinen dem Tragrahmen (14a, 14b) und Schlitten (15a, 15b) zugewandten Seiten jeweils in gegenüberliegenden, stirnseitigen Endbereichen mit je einer Schleifkörperanordnung (18a, 18c) versehen sind, wobei jeweils zwischen einer Schleifleitungsanordnung (16, 22a, 22b) und einer Schleifkörperanordnung (18, 18d, 18a, 18c) ein elektrischer Schleifkontakt (17, 17a, 17b) ausgebildet ist und die Schleifleitungsanordnungen (16, 22a, 22b) am ersten Zwischenschlitten (21a, 21b) als auch die Schleifkörperanordnungen (18, 18d, 18a, 18c) am zweiten Zwischenschlitten (26a, 26b) jeweils elektrisch leitend miteinander verbunden sind.

23. Teleskopschubarm nach einem der Ansprüche 1 bis 22, **dadurch gekennzeichnet, dass** eine Länge (46) der Schleifleitungsanordnung (16; 22a, 22b; 23) annähernd der Länge des Tragrahmens (14a, 14b), Zwischenschlittens (21a, 21b, 26a, 26b) oder Schlittens (15a, 15b) entspricht.

24. Teleskopschubarm nach einem der Ansprüche 1 bis 23, **dadurch gekennzeichnet, dass** eine Länge (48) des Schleiflcontaktes (17, 17a, 17b) der Schleifkörperanordnung (18 bis 18e) zwischen der Schleifleitungsanordnung (16, 22a, 22b; 23) und Schleifkörperanordnung (18 bis 18e) einem Bruchteil der Länge (46) der Schleifleitungsanordnung (16; 22a, 22b; 23) entspricht.

25. Teleskopschubarm nach einem der Ansprüche 1 bis 24, **dadurch gekennzeichnet, dass** die Schleifleitungsanordnung (16; 22a, 22b; 23) durch mehrere parallel nebeneinander liegende Schleifleitungen (54) und jeder der Schleifkörperanordnungen (18 bis 18e) durch mehrere federbetätigte Schleifkörper (55), insbesondere Schleifkohlen, gebildet sind.

26. Lastaufnahmevorrichtung (9) zur Lastaufnahme oder Lastabgabe von Ladehilfsmitteln (12), insbesondere für ein Förderfahrzeug, z.B. Regalbediengerät (6), eines Lagersystems (1), mit zwei zueinander parallel verlaufenden, im Abstand voneinander angeordneten und quer zu einer Gasse (2) synchron ausfahrbaren Teleskopschubarmen (11a, 11b), **dadurch gekennzeichnet, dass** die Teleskopschubarme (11a, 11b) nach einem der Ansprüche 1 bis 25 ausgebildet sind.

## Claims

1. Telescopic push arm (11a, 11b) for a load-receiving device (9) disposed on a vertically and/or horizontally adjustable lifting platform (8) of a conveying vehicle, for storing an auxiliary loading means (12) in and removing it from a shelf storage system (3a, 3b), with a support frame (14a, 14b) and at least one carriage (15a, 15b) which can be adjusted relative to it, which carriage (15a, 15b) can be extended in in one direction with respect to the support frame (14a, 14b), and with at least one servo-drive (50a to 50d) and/or at least one sensor (51), and the servo-drive (50a to 50d) and/or the sensor (51) is connected to an electrical interface (52) disposed within the area of the support frame (14a, 14b) via a transmission means (20) for transmitting electrical energy and/or electrical signals, **characterised in that** the transmission means (20) for transmitting electrical energy and/or electrical signals is provided in the form of at least one sliding-line arrangement (16; 22a, 22b; 23) and at least one sliding-body arrangement (18; 18a; 18b), and the sliding-line arrangement (16; 22a; 22b; 23) and the sliding-body arrangement (18; 18a; 18b) are disposed between the support frame (14a, 14b) and carriage (15a, 15b), and at least one electrical sliding contact (17, 17a, 17b) is provided as a means of transmitting energy and/or signals from the interface (52) to the servo-drive (50a to 50d) and/or sensor (51) and conversely, if necessary, between the sliding-line arrangement (16; 22a; 22b; 23) and sliding body arrangement (18; 18a; 18b).

2. Telescopic push arm as claimed in claim 1, **characterised in that** the sliding-line arrangement (16) is disposed on the support frame (14a, 14b) and the sliding-body arrangement (18) is disposed on the carriage (15a, 15b).

3. Telescopic push arm as claimed in claim 1, **characterised in that** the sliding-line arrangement (16) is disposed on the carriage (15a, 15b) and the sliding-body arrangement (18) is disposed on the support frame (14a, 14b).

4. Telescopic push arm according to claim 1 or 2, **characterised in that** the carriage (15a, 15b) is provided with the sliding-body arrangement (18) in its oppositely lying end region (25a; 25b) in the direction of extension.

5. Telescopic push arm as claimed in claim 1 or 3, **characterised in that** the support frame (14a, 14b) is provided with the sliding-body arrangement (18) in at least its front end region (27a; 27b) as viewed in the direction of extension (19a; 19b) of the carriage (15a, 15b)..

6. Telescopic push arm as claimed in claim 1, **characterised in that** at least one intermediate carriage (21a, 21b) is disposed between the support frame (14a, 14b) and the carriage (15a, 15b), and the carriage (15a, 15b) and intermediate carriage (21a, 21b) are adjustable relative to the support frame (14a, 14b), and the carriage (15a, 15b) and intermediate carriage (21a, 21b) are adjustable relative to one another, and the intermediate carriage (21a, 21b), carriage (15a, 15b) and support frame (14a, 14b) are one in the other, and a first sliding-line arrangement (16; 22a) and a first sliding-body arrangement (18) are disposed between the support frame (14a, 14b) and intermediate carriage (21a, 21b) and a second sliding-line arrangement (22b) and another sliding-body arrangement (18a) are disposed between the carriage (15a, 15b) and intermediate carriage (21a, 21b).

7. Telescopic push arm as claimed in claim 6, **characterised in that** the intermediate carriage (21a, 21b) has a sliding-line arrangement (22a, 22b) on each of its faces directed towards the support frame (14a, 14b) and carriage (15a, 15b), and the carriage (15a, 15b), in its end region (25a; 25b) lying opposite in the direction of extension (19a; 19b), and the support frame (14a, 14b), in its front end region (27a; 27b) as viewed in the direction of extension of the carriage (15a, 15b), are each provided with a sliding-body arrangement (18a, 18), and an electrical sliding contact (17, 17a) is provided between each sliding-line arrangement (22a, 22b) and a sliding-body arrangement (18a, 18), and the sliding-line arrangements (22a, 22b) on the intermediate carriage (21a, 21b) are electrically conductively connected to one another.

8. Telescopic push arm as claimed in claim 6, **characterised in that** the support frame (14a, 14b) and carriage (15a, 15b) are each provided with a sliding-line arrangement (16, 23) on mutually facing sides, and the intermediate carriage (21a, 21b) is provided with a sliding-body arrangement (18,18a) respectively on its side facing the support frame (14a, 14b) in the oppositely lying end region (24a; 24b) the direction of extension (19a; 19b) of the carriage (15a, 15b) and on its side facing the carriage (15a, 15b) in the end region (24a; 24b) facing the direction of extension (19a, 19b) of the carriage (15a, 15b), and an electrical sliding contact (17, 17a) is provided between each sliding-line arrangement (16, 23) and sliding-body arrangement (18, 18a), and the sliding-body arrangements (18, 18a) on the intermediate carriage (21a, 21b) are electrically conductively connected to one another.

9. Telescopic push arm as claimed in claim 1, **characterised in that** two intermediate carriages (21a, 21b, 26a, 26b) are disposed between the support frame (14a, 14b) and the carriage (15a, 15b), and the intermediate carriages (21a, 21b, 26a, 26b) are adjustable relative to the support frame (14a, 14b), and the carriage (15a, 15b) and intermediate carriages (21a, 21b, 26a, 26b) are adjustable relative to each other, and the intermediate carriages (21a, 21b, 26a, 26b), carriage (15a, 15b) and support frame (14a, 14b) are guided one in the other, and a first sliding-line arrangement (16) and a first sliding-body arrangement (18) are disposed between the support frame (14a, 14b) and first intermediate carriage (21a, 21b) and a second sliding-line arrangement (22a) and a second sliding-body arrangement (18a) are disposed between the first and second intermediate carriages (21a, 21b), and a third sliding-line arrangement (22b) and a third sliding-body arrangement (18b) are disposed between the second intermediate carriage (21a, 21b) and carriage (15a, 15b).

10. Telescopic push arm as claimed in claim 9, **characterised in that** the support frame (14a, 14b) is provided with the sliding-line arrangement (16) and the second intermediate carriage (26a, 26b) adjacent to the carriage (15a, 15b) has a sliding-line arrangement (22a, 22b) on each of its sides facing the support frame (14a, 14b) and carriage (15a, 15b), and the first intermediate carriage (21a, 21b) adjacent to the support frame (14a, 14b) is provided with a sliding-body arrangement (18, 18a) on each of its sides facing the support frame (14a, 14b) in the oppositely end region (24a; 24b) in the direction of extension (19a; 19b) and a sliding body arrangement (18, 18a) on its side facing the carriage (15a, 15b) in the front end region (24a; 24b) as viewed in the direction of extension (19a; 19b), and the carriage (15a, 15b) is provided with a sliding-body arrangement (18b) in its oppositely lying end regions (25a, 25b) in the direction of extension (19a; 19b), and an electrical sliding contact (17, 17a, 17b) is provided between each sliding-line arrangement (16, 22a, 22b) and a sliding-body arrangement (18, 18a, 18b), and the sliding-body arrangements (18, 18a) on the first intermediate carriage (21a, 21b) and the sliding-line arrangements (16, 22a, 22b) on the second intermediate carriage (26a, 26b) are electrically conductively connected to one another.

11. Telescopic push arm as claimed in claim 9, **characterised in that** the carriage (15a, 15b) is provided with the sliding-line arrangement (16) on its side facing the support frame (14a, 14b), and the first intermediate carriage (21a, 21b) adjacent to the support frame (14a, 14b) has a sliding-line arrangement (22a, 22b) on each of its sides facing the support frame (14a, 14b) and carriage (15a, 15b), and the support frame (14a, 14b) is provided with a sliding-body arrangement (18) in the end region (27a; 27b) facing the direction of extension (19a; 19b) of the carriage (15a, 15b), and the second intermediate carriage (26a, 26b) adjacent to the carriage (15a,15b) is provided with a sliding-body arrangement (18a, 18b) on each of its sides facing the support frame (14a, 14b) in the oppositely lying end region in the direction of extension (19a; 19b) of the carriage (15a, 15b) and on its side facing the carriage (15a, 15b) in the front end region as viewed in the direction of extension (19a; 19b) of the carriage (15a, 15b), and an electrical sliding contact (17, 17a, 17b) is provided between each sliding-line arrangement (16, 22a, 22b) and a sliding-body arrangement (18, 18a, 18b), and the sliding-line arrangements (22a, 22b) on the first intermediate carriage (21a, 21b) and the sliding-body arrangements (18a, 18b) on the second intermediate carriage (26a, 26b) are electrically conductively connected to one another.

12. Telescopic push ann as claimed in claim 1, **characterized in that** the carriage (15a, 15b) can be extended in both directions with respect to the support frame (14a, 14b), and the transmission means (20) for transmitting electrical energy and/or electrical signals is provided in the form of at least one sliding line arrangement (16; 22a, 22b; 23) and at least two sliding body arrangements (18 to 18e) disposed separately at a distance apart in the direction of extension (19a, 19b) of the carriage (15a, 15b), and the sliding line arrangement (16; 22a, 22b; 23) and sliding body arrangements (18 to 18e) are disposed between the support frame (14a, 14b) and carriage (15a, 15b), and the distance between the sliding body arrangements (18 to 18e) is shorter than the maximum length of the carriage (15a, 15b) and/or support frame (14a, 14b), and at least one electrical sliding contact (17; 17a;17b) is provided between the sliding-line arrangement (16; 22a, 22b; 23) and a sliding-body arrangement (18 to 18e) for transmitting energy and/or signals from the interface (52) to the servo-drive (50a to 50f) and/or sensor (51) and vice versa if necessary.

13. Telescopic push arm as claimed in claim 12, **characterised in that** the sliding-line arrangement (16) is disposed on the support frame (14a, 14b) and the sliding-body arrangements (18a, 18b) are disposed on the carriage (15a, 15b).

14. Telescopic push arm as claimed in claim 12, **characterised in that** the sliding-line arrangement (16) is disposed on the carriage (15a, 15b) and the sliding-body arrangements (18a, 18b) are disposed on the support frame (14a, 14b).

15. Telescopic push arm as claimed in claim 12 or 13, **characterised in that** the carriage (15a, 15b) is provided with at least one sliding-body arrangement (18) in each of its oppositely lying terminal end regions (25a; 25b).

16. Telescopic push arm as claimed in claim 12 or 14, **characterised in that** the support frame (14a,14b) is provided with at least one sliding-body arrangement (18a, 18b) in each of its oppositely lying terminal end regions (27a; 27b) as viewed in the direction of extension (19a; 19b) of the carriage (15a, 15b).

17. Telescopic push arm as claimed in claim 12, **characterised in that** at least one intermediate carriage (21a, 21b) is disposed between the support frame (14a, 14b) and the carriage (15a, 15b), and the carriage (15a, 15b) and intermediate carriage (21a, 21b) are adjustable relative to the support frame (14a, 14b), and the carriage (15a, 15b) and the intermediate carriage (21a, 21b) are adjustable relative to one another, and the intermediate carriage (21a, 21b), the carriage (15a, 15b) and support frame (14a, 14b) are guided one in the other, and a first sliding-line arrangement (22a) and two sliding body arrangements (18, 18c) are disposed between the support frame (14a, 14b) and intermediate carriage (21a, 21b), and a second sliding-line arrangement (22b) and two other sliding-body arrangements (18a, 18b) are disposed between the carriage (15a, 15b) and intermediate carriage (21a, 21b).

18. Telescopic push arm as claimed in claim 17, **characterised in that** the support frame (14a, 14b) and carriage (15a, 15b) each have a sliding-body arrangement (18, 18c, 18a, 18b) in their oppositely lying terminal end regions (27a, 27b, 25a, 25b), and the intermediate carriage (21a, 21b) is provided with a sliding-line arrangement (22a, 22b) on each of its sides facing the support frame (14a, 14b) and carriage (15a, 15b), and at least one electrical sliding contact (17, 17a) is provided between each sliding-line arrangement (16, 23) and a sliding-body arrangement (18, 18c, 18a, 18b), and the sliding-line arrangements (22a, 22b) on the intermediate carriage (21a, 21b) are electrically conductively connected to one another.

19. Telescopic push arm as claimed in claim 17, **characterised in that** the support frame (14a, 14b) and carriage (15a, 15b) are each provided with a sliding line arrangement (22a, 22b) on mutually facing sides and the intermediate carriage (21a, 21b) is provided with a sliding-body arrangement (18, 18c, 18a, 18b) on its sides facing the support frame (14a, 14b) and carnage (15a, 15b) in each of the oppositely lying terminal end regions (24a. 24b), and an electrical sliding contact (17, 17a) is provided between every sliding-line arrangement (22a, 22b) and a sliding body arrangement (18, 18c, 18a, 18b), and the sliding body arrangements (18, 18c, 18a, 18b) are electrically conductively connected to one another.

20. Telescopic push arm as claimed in claim 12, **characterised in that** two intermediate carriages (21a, 21b, 26a, 26b) are disposed between the support frame (14a, 14b) and the carriage (15a, 15b), and the intermediate carriages (21a, 21b, 26a, 26b) are adjustable relative to the support frame (14a, 14b), and the carriage (15a, 15b) and the intermediate carriages (21a, 21b, 26a, 26b) are adjustable relative to one another, and the intermediate carriages (21a, 21b, 26a, 26b), the carriage (15a, 15b) and the support frame (14a, 14b) are guided one in the other, and a first sliding-line arrangement (16) and two first sliding-body arrangements (18, 18) are disposed between the support frame (14a, 14b) and first intermediate carriage (21a, 21b), and a second sliding-line arrangement (22a) and two second sliding-body arrangements (18a, 18c) are disposed between the first and second intermediate carriages (21a, 21b, 26a, 26b), and a third sliding-line arrangement (22b) and two third sliding body arrangements (18b, 18e) are disposed between the second intermediate carriage (21a, 21b) and carriage (15a, 15b).

21. Telescopic push arm as claimed in claim 20, **characterised in that** the support frame (14a, 14b) has the sliding-line arrangement (16), and the second intermediate carriage (26a, 26b) adjacent to the carriage (15a, 15b) has a sliding-line arrangement (22a, 22b) on each of its sides facing the support frame (14a, 14b) and the carriage (15a, 15b), and the first intermediate carriage (21a, 21b) adjacent to the support frame (14a, 14b) is provided with a sliding-body arrangement (18, 18d) on each of its sides facing the support frame (14a, 14b) and carriage (125a, 15b) in the oppositely lying terminal end regions (24a; 24b), and the carriage (15a, 15b) is provided with a sliding-body arrangement (18b, 18e) in each of the oppositely lying terminal end regions, and an electrical sliding contact (17, 17a, 17b) is provided between each sliding-line arrangement (16, 22a, 22b) and a sliding-body arrangement (18, 18a to 18e), and the sliding-body arrangements (18,18a, 18c, 18d) on the first intermediate carriage (21a, 21b) and the sliding-line arrangements ( 22a, 22b) on the second intermediate carriage (26a, 26b) are each electrically conductively connected to one another.

22. Telescopic push arm as claimed in claim 20, **characterised in that** the carriage (15a, 15b) has the sliding-line arrangement (16) on its side facing the support frame (14a, 14b), and the first intermediate carriage (21a, 21b) adjacent to the support frame (14a, 14b) has a sliding-line arrangement (22a, 22b) on each of its sides facing the support frame (14a, 14b) and carriage (15a, 15b), and the support frame (14a, 14b) is provided with a sliding-body arrangement (18, 18d) in oppositely lying terminal end regions (27a, 27b), and the second intermediate carriage (26a, 26b) adjacent to the carriage (15a, 15b) is provided with a sliding-body arrangement (18a, 18c) on its sides facing the support frame (14a, 14b) and carriage (15a, 15b) in oppositely lying terminal end regions, and an electrical sliding contact (17, 17a, 17b) is provided between each sliding-line arrangement (16; 22a, 22b) and a sliding-body arrangement (18, 18d, 18a, 18c), and the sliding-line arrangements (16, 22a, 22b) on the first intermediate carriage (26a, 26b) and the sliding body arrangements (18, 18d, 18a, 18c) on the second intermediate carriage (26a, 26b) are electrically conductively connected to one another.

23. Telescopic push arm as claimed in any one of claims 1 to 22, **characterised in that** the length (46) of the sliding-line arrangement (16; 22a, 22b; 23) approximately corresponds to the length of the support frame (14a, 14b), intermediate carriage (21a, 21b, 26a, 26b), or carriage (15a, 15b).

24. Telescopic push arm as claimed in any one of claims 1 to 23, **characterised in that** a length (48) of the sliding contact (17, 17a, 17b) of the sliding-body arrangement (18 to 18e) between the sliding- line arrangement (16; 22a, 22b; 23) and sliding body arrangement (18 to 18e) amounts to a fraction of the length (46) of the sliding-line arrangement (16; 22a, 22b; 23).

25. Telescopic push arm as claimed in any one of claims 1 to 24, **characterised in that** the sliding-line arrangement (16; 22a, 22b; 23) is provided in the form of several adjacently lying parallel sliding lines (54) and each of the sliding-body arrangements (18 to 18e) is provided in the form of several spring-actuated sliding bodies (55), in particular carbon brushes.

26. Load-receiving device (9) for receiving and delivering loads of auxiliary loading means (12), in particular for a conveying vehicle, e.g. a shelf-servicing device (6) of a storage system (1), with two telescopic push arms (11a, 11b) extending parallel with and spaced apart from one another, and synchronously extendible transversely to an aisle (2), **characterised in that** the telescopic push arms (11a, 11b) are as claimed in any one of claims 1 to 25.

## Revendications

1. Bras de poussée télescopique (11a, 11b) utilisé pour un dispositif de réception de charges (9) disposé sur une plate-forme de levage (8), déplaçable verticalement et/ou horizontalement, d'un véhicule transporteur, pour le stockage ou le déstockage d'un moyen auxiliaire de chargement (12) dans ou àpartir d'un stock de rayonnages (3a, 3b), comprenant un cadre porteur (14a, 14b) et au moins un coulisseau (15a, 15b) pouvant se déplacer par rapport à ce cadre, lequel coulisseau (15a, 15b) peut être sorti par rapport au cadre porteur (14a, 14b) vers une même direction et doté d'au moins un entraînement de positionnement (50a à 50d) et/ou d'au moins un capteur (51), l'entraînement de positionnement (50a à 50d) et/ou le capteur (51) étant relié(s) par un moyen de transmission (20) pour de l'énergie électrique et/ou des signaux électriques à une interface (52) électrique disposée dans la zone du cadre porteur (14a, 14b), **caractérisé en ce que** le moyen de transmission (20) pour de l'énergie électrique et/ou des signaux électriques est formé par au moins un agencement de ligne à frottement (16; 22a, 22b; 23) et au moins un agencement de corps à frottement (18; 18a; 18b), l'agencement de ligne à frottement (16; 22a, 22b; 23) et l'agencement de corps à frottement (18;18a;18b) étant disposés entre le cadre porteur (14a, 14b) et le coulisseau (15a, 15b) et **en ce qu'**au moins un contact à frottement (17; 17a; 17b) électrique est conçu pour la transmission d'énergie et/ou de signaux de l'interface (52) à l'entraînement de positionnement (50a à 50d) et/ou le capteur (51) et éventuellement inversement entre l'agencement de ligne à frottement (16; 22a, 22b; 23) et l'agencement de corps à frottement (18; 18a; 18b).

2. Bras de poussée télescopique selon la revendication 1, **caractérisé en ce que** l'agencement de ligne à frottement (16) est disposé sur le cadre porteur (14a, 14b) et l'agencement de corps à frottement (18) sur le coulisseau (15a, 15b).

3. Bras de poussée télescopique selon la revendication 1, **caractérisé en ce que** l'agencement de ligne à frottement (16) est disposé sur le coulisseau (15a, 15b) et l'agencement de corps à frottement (18) sur le cadre porteur (14a, 14b).

4. Bras de poussée télescopique selon la revendication 1 ou 2, **caractérisé en ce que** le coulisseau (15a, 15b) est doté de l'agencement de corps à frottement (18) dans sa zone d'extrémité 25a; 25b) en regard dans le sens de sortie (19a; 19b).

5. Bras de poussée télescopique selon la revendication 1 ou 3, **caractérisé en ce que** le cadre porteur (14a, 14b) est doté de l'agencement de corps à frottement (18) au moins dans sa zone d'extrémité (27a; 27b) avant, vue dans le sens de sortie (19a; 19b) du coulisseau (15a, 15b).

6. Bras de poussée télescopique selon la revendication 1, **caractérisé en ce qu'**au moins un coulisseau intermédiaire (21a, 21b) est disposé entre le cadre porteur (14a, 14b) et le coulisseau (15a, 15b), le coulisseau (15a, 15b) et le coulisseau intermédiaire (21a, 21b) pouvant se déplacer par rapport au cadre porteur (14a, 14b) et le coulisseau (15a, 15b) et le coulisseau intermédiaire (21a, 21b) pouvant se déplacer l'un par rapport à l'autre, le coulisseau intermédiaire (21a, 21b), le coulisseau (15a, 15b) et le cadre porteur (14a, 14b) étant guidés les uns au-dessous des autres et **en ce qu'**un premier agencement de ligne à frottement (16; 22a) et un premier agencement de corps à frottement (18) sont disposés entre le cadre porteur (14a, 14b) et le coulisseau intermédiaire (21a, 21b) et un second agencement de ligne à frottement (22b) et un autre agencement de corps à frottement (18a) sont disposés entre le coulisseau (15a, 15b) et le coulisseau intermédiaire (21a, 21b).

7. Bras de poussée télescopique selon la revendication 6, **caractérisé en ce que** le coulisseau intermédiaire (21a, 21b) présente à chaque fois un agencement de ligne à frottement (22a, 22b) sur ses côtés tournés vers le cadre porteur (14a, 14b) et le coulisseau (15a, 15b) et **en ce que** le coulisseau (15a, 15b) dans sa zone d'extrémité (25a; 25b) en regard dans le sens de sortie (19a; 19b) et le cadre porteur (14a, 14b) dans sa zone d'extrémité (27a; 27b) avant, vue dans le sens de sortie (19a; 19b) du coulisseau (15a; 15b), sont dotés à chaque fois d'un agencement de corps à frottement (18a, 18), un contact à frottement (17a, 17) électrique étant conçu à chaque fois entre un agencement de ligne à contact (22a, 22b) et un agencement de corps à frottement (18a, 18) et les agencement de ligne à frottement (22a, 22b) étant reliés les uns aux autres de façon électro-conductrice sur le coulisseau intermédiaire (21a, 21b).

8. Bras de poussée télescopique selon la revendication 6, **caractérisé en ce que** le cadre porteur (14a, 14b) et le coulisseau (15a, 15b) présentent dans chaque cas un agencement de ligne à contact (16, 23) sur des côtés tournés les uns vers les autres et **en ce que** le coulisseau intermédiaire (21a, 21b) sur son côté tourné vers le cadre porteur (14a, 14b) dans la zone d'extrémité (24a; 24b) en regard dans le sens de sortie (19a; 19b) du coulisseau (15a, 15b) et sur son côté tourné vers le coulisseau (15a, 15b) dans la zone d'extrémité (24a; 24b) tourné dans le sens de sortie (19a, 19b) du coulisseau (15a, 15b) est doté de respectivement un agencement de corps à frottement (18, 18a), un contact à frottement (17, 17a) électrique étant conçu à chaque fois entre un agencement de ligne à frottement (16, 23) et un agencement de corps à frottement (18, 18a) et les agencements de corps à frottement (18, 18a) étant reliés les uns aux autres de façon électro-conductrice sur le coulisseau intermédiaire (21a, 21b).

9. Bras de poussée télescopique selon la revendication 1, **caractérisé en ce que** deux coulisseaux intermédiaires (21a, 21b, 26a, 26b) sont disposés entre le cadre porteur (14a, 14b) et le coulisseau (15a, 15b), les coulisseaux intermédiaires (21a, 21b, 26a, 26b) pouvant être déplacés par rapport au cadre porteur (14a, 14b) et le coulisseau (15a, 15b) et le coulisseau intermédiaire (21a, 21b, 26a, 26b) l'un par rapport à l'autre, les coulisseaux intermédiaires (21a, 21b, 26a, 26b), le coulisseau (15a, 15b) et le cadre porteur (14a, 14b) étant guidés les uns au-dessous des autres et **en ce que** entre le cadre porteur (14a, 14b) et les premiers coulisseaux intermédiaires (21a, 21b) sont disposés un premier agencement de ligne à frottement (16) et un premier agencement de corps à frottement (18) et entre le premier et le second coulisseaux intermédiaires (21a, 21b) sont disposés un second agencement de ligne à frottement (22a) et un second agencement de corps à frottement (18a) et entre le second coulisseau intermédiaire (21a, 21b) et le coulisseau (15a, 15b) sont disposés un troisième agencement de ligne à frottement (22b) et un troisième agencement de corps à frottement (18b).

10. Bras de poussée télescopique selon la revendication 9, **caractérisé en ce que** le cadre porteur (14a, 14b), l'agencement de ligne à frottement (16) et le second coulisseau intermédiaire (26a, 26b) voisin du coulisseau (15a, 15b) présentent à chaque fois un agencement de ligne à frottement (22a, 22b) sur ses côtés tournés vers le cadre porteur (14a, 14b) et le coulisseau (15a, 15b) et **en ce que** le premier coulisseau intermédiaire (21a, 21b), voisin du cadre porteur (14a, 14b), est doté sur son côté tourné vers le cadre porteur (14a, 14b), dans la zone d'extrémité (24a; 24b) en regard dans le sens de sortie (19a; 19b), et sur son côté tourné vers le coulisseau (15a, 15b), dans la zone d'extrémité (24a; 24b) avant, vue dans le sens de sortie (19a; 19b), de respectivement un agencement de corps à frottement (18, 18a) et le coulisseau (15a, 15b) dans la zone d'extrémité (25a; 25b) en regard dans son sens de sortie (19a; 19b) d'un agencement de corps à frottement (18b), un contact à frottement (17, 17a, 17b) électrique étant conçu à chaque fois entre un agencement de ligne à frottement (16, 22a, 22b) et un agencement de corps à frottement (18,18a, 18b) et les agencements de corps à frottement (18,18a) sur le premier coulisseau intermédiaire (21a, 21b) de même que les agencements de ligne à frottement (16, 22a, 22b) sur le second coulisseau intermédiaire (26a, 26b) étant reliés à chaque fois les uns aux autres de façon électro-conductrice.

11. Bras de poussée télescopique selon la revendication 9, **caractérisé en ce que** le coulisseau (15a, 15b) présente l'agencement de ligne à frottement (16) sur son côté tourné vers le cadre porteur (14a, 14b) et le premier coulisseau intermédiaire (21a, 21b), voisin du cadre porteur (14a, 14b), présente à chaque fois un agencement de ligne à frottement (22a, 22b) sur ses côtés tournés vers le cadre porteur (14a, 14b) et le coulisseau (15a, 15b) et **en ce que** le cadre porteur (14a, 14b) dans la zone d'extrémité (27a; 27b), tournée dans le sens de sortie (19a; 19b) du coulisseau (15a, 15b), est doté d'un agencement de corps à frottement (18) et le second coulisseau intermédiaire (26a, 26b), voisin du coulisseau (15a, 15b), est doté, sur son côté tourné vers le cadre porteur (14a, 14b) dans la zone d'extrémité en regard dans le sens de sortie (19a; 19b) du coulisseau (15a, 15b) et sur son côté tourné vers le coulisseau (15a,15b) dans l'extrémité avant, vue dans le sens de sortie (19a; 19b) du coulisseau (15a, 15b), de respectivement un agencement de corps à frottement (18a, 18b), un contact à frottement (17, 17a, 17b) électrique étant conçu à chaque fois entre un agencement de ligne à frottement (16, 22a, 22b) et un agencement de corps à frottement (18, 18a, 18b) et les agencements de ligne à frottement (22a, 22b) sur le premier coulisseau intermédiaire (21a, 21b) de même que les agencements de corps à frottement (18a, 18b) sur le second coulisseau intermédiaire (26a, 26b) étant reliés à chaque fois de façon électro-conductrice les uns aux autres.

12. Bras de poussée télescopique selon la revendication 1, **caractérisé en ce que** le coulisseau (15a, 15b) peut être sorti dans les deux directions par rapport au cadre porteur (14a, 14b) et le moyen de transmission (20) pour de l'énergie électrique et/ou des signaux électriques est formé par au moins un agencement de ligne à frottement (16; 22a, 22b; 23) et au moins deux agencements de corps à frottement (18 à 18e) prévus séparés à distance dans la construction dans le sens de sortie (19a, 19b) du coulisseau (15a, 15b), l'agencement de ligne à frottement (16; 22a, 22b; 23) et des agencements de corps à frottement (18 à 18e) étant disposés entre le cadre porteur (14a, 14b) et le coulisseau (15a, 15b) et la distance entre les agencements de corps à contact (18 à 18e) étant inférieure à la longueur maximale du coulisseau (15a, 15b) et/ou du cadre porteur (14a, 14b) et **en ce que**, pour la transmission d'énergie et/ou de signaux de l'interface (52) à l'entraînement de positionnement (50a à 50f) et/ou au capteur (51) et éventuellement inversement, au moins un contact à frottement (17, 17a, 17b) électrique est réalisé entre l'agencement de ligne à contact (16; 22a, 22b; 23) et un agencement de corps à contact (18 à 18e).

13. Bras de poussée télescopique selon la revendication 12, **caractérisé en ce que** l'agencement de ligne à frottement (16) et les agencements de corps à frottement (18a, 18b) sont disposés respectivement sur le cadre porteur (14a, 14b) et sur le coulisseau (15a, 15b).

14. Bras de poussée télescopique selon la revendication 12, **caractérisé en ce que** l'agencement de ligne à frottement (16) et les agencements de corps à frottement (18a, 18b) sont disposés respectivement sur le coulisseau (15a,15b) et sur le cadre porteur (14a, 14b).

15. Bras de poussée télescopique selon la revendication 12 ou 13, **caractérisé en ce que** le coulisseau (15a, 15b) est doté sur ses zones d'extrémité (25a, 25b) côté avant se faisant face à chaque fois, d'au moins un agencement de corps à frottement (18a, 18b).

16. Bras de poussée télescopique selon la revendication 12 ou 14, **caractérisé en ce que** le cadre porteur (14a, 14b) est doté sur ses zones d'extrémité (27a, 27b) côté avant se faisant face à chaque fois d'au moins un agencement de corps à frottement (18a, 18b).

17. Bras de poussée télescopique selon la revendication 12, **caractérisé en ce qu'**au moins un coulisseau intermédiaire (21a, 21b) est disposé entre le cadre porteur (14a, 14b) et le coulisseau (15a, 15b), le coulisseau (15a, 15b) et le coulisseau intermédiaire (21a, 216) pouvant être déplacés par rapport au cadre porteur (14a, 14b) et le coulisseau (15a, 15b) et le coulisseau intermédiaire (21a, 21b) pouvant être déplacés l'un par rapport à l'autre, le coulisseau intermédiaire (21a, 21b), le coulisseau (15a, 15b) et le cadre porteur (14a, 14b) étant guidés les uns au-dessous des autres et **en ce qu'**un premier agencement de ligne à frottement (22a) et deux agencements de corps à frottement (18, 18c) sont disposés entre le cadre porteur (14a, 14b) et le coulisseau intermédiaire (21a, 21b) et un second agencement de ligne à frottement (22b) et deux autres agencements de corps à frottement (18a, 18b) sont disposés entre le coulisseau (15a, 15b) et le coulisseau intermédiaire (21a, 21b).

18. Bras de poussée télescopique selon la revendication 17, **caractérisé en ce que** le cadre porteur (14a, 14b) et le coulisseau (15a, 15b) sont dotés à chaque fois dans ses zones d'extrémité (27a, 27b, 25a, 25b) côté avant se faisant face de respectivement un agencement de corps à frottement (18, 18c, 18a, 18b) et le coulisseau intermédiaire (21a, 21b) est doté sur ses côtés tournés vers le cadre porteur (14a, 14b) et le coulisseau (15a, 15b) de respectivement un agencement de ligne à frottement (22a, 22b), au moins un contact à frottement (17, 17a) électrique étant conçu à chaque fois entre un agencement de ligne à frottement (22a, 22b) et un agencement de corps à frottement (18, 18c, 18a, 18b) et les agencements de ligne à frottement (22a, 22b) étant reliés les uns aux autres de façon électro-conductrice sur le coulisseau intermédiaire (21a, 21b).

19. Bras de poussée télescopique selon la revendication 17, **caractérisé en ce que** le cadre porteur (14a,14b) et le coulisseau (15a, 15b) sont dotés sur des côtés tournés les uns vers les autres à chaque fois d'un agencement de ligne à frottement (22a, 22b) et le coulisseau intermédiaire (21a, 21b) est doté sur ses côtés tournés vers le cadre porteur (14a, 14b) et le coulisseau (15a, 15b), à chaque fois dans des zones d'extrémité (24a, 24c) côté avant se faisant face de respectivement un agencement de corps à frottement (18, 18c, 18a, 18b), un contact à frottement (17, 17a) électrique étant conçu à chaque fois entre un agencement de ligne à frottement (22a, 22b) et un agencement de corps à frottement (18, 18c, 18a,18b) et les agencements de corps à frottement (18, 18c,18a, 18b) étant reliés les uns aux autres de façon électro-conductrice.

20. Bras de poussée télescopique selon la revendication 12, **caractérisé en ce que** deux coulisseaux intermédiaires (21a, 21b, 26a, 26b) sont disposés entre le cadre porteur (14a, 14b) et le coulisseau (15a, 15b), les coulisseaux intermédiaires (21a, 21b, 26a, 26b) pouvant être déplacés par rapport au cadre porteur (14a, 14b) et le coulisseau (15a, 15b) et les coulisseaux intermédiaires (21a, 21b, 26a, 26b) pouvant être déplacés les uns par rapport aux autres, les coulisseaux intermédiaires (21a, 21b, 26a, 26b), le coulisseau (15a,15b) et le cadre porteur (14a, 14b) étant guidés les uns au-dessous des autres et **en ce qu'**un premier agencement de ligne à frottement (16) et deux premiers agencements de corps à frottement (18, 18,) sont disposés entre le cadre porteur (14a, 14b) et des premiers coulisseaux intermédiaires (21a, 21b), un second agencement de ligne à frottement (22a) et deux seconds agencements de corps à frottement (18a, 18c) entre le premier et le second coulisseaux intermédiaires (21a, 21b, 26a, 26b), et un troisième agencement de ligne à frottement (22b) et deux troisièmes agencements de corps à frottement (18b, 18e) sont disposés entre le second coulisseau intermédiaire (26a, 26b) et le coulisseau (15a, 15b).

21. Bras de poussée télescopique selon la revendication 20, **caractérisé en ce que** le cadre porteur (14a, 14b), l'agencement de ligne à frottement (16) et le second coulisseau intermédiaire (26a, 26b), voisin du coulisseau (15a, 15b), présentent à chaque fois un agencement de ligne à frottement (22a, 22b) sur ses côtés tournés vers le cadre porteur (14a, 14b) et le coulisseau (15a,15b) et **en ce que** le premier coulisseau intermédiaire (21a, 21b), voisin du cadre porteur (14a, 14b), est doté sur ses côtés tournés vers le cadre porteur (14a, 14b) et le coulisseau (15a, 15b) à chaque fois dans des zones d'extrémité (24a, 24b) côté avant se faisant face de respectivement un agencement de corps à frottement (18, 18d) et le coulisseau (15a, 15b) est doté à chaque fois dans des zones d'extrémité (25a, 25b) côté avant se faisant face de respectivement un agencement de corps à frottement (18b, 18e), un contact à frottement (17, 17a, 17b) électrique étant conçu à chaque fois entre un agencement de ligne à frottement (16, 22a, 22b) et un agencement de corps à frottement (18, 18a à 18e) et les agencements de corps à frottement (18, 18a, 18c, 18d) sur le premier coulisseau intermédiaire (21a, 21b) de même que les agencements de ligne à frottement (22a, 22b) sur le second coulisseau intermédiaire (26a, 26b) étant reliés à chaque fois de façon électro-conductrice les uns aux autres.

22. Bras de poussée télescopique selon la revendication 20, **caractérisé en ce que** le coulisseau (15a, 15b) présente l'agencement de ligne à frottement (16) sur son côté tourné vers le cadre porteur (14a, 14b) et le premier coulisseau intermédiaire (21a, 21b), voisin du cadre porteur (14a, 14b), présente à chaque fois un agencement de ligne à frottement (22a, 22b) sur ses côtés tournés vers le cadre porteur (14a, 14b) et le coulisseau (15a, 15b), et **en ce que** le cadre porteur (14a, 14b) est doté à chaque fois dans des zones d'extrémité (27a, 27b) côté avant se faisant face de respectivement un agencement de corps à frottement (18, 18d) et le second coulisseau intermédiaire (26a, 26b), voisin du coulisseau (15a, 15b), est doté sur ses cotés tournés vers le cadre porteur (14a, 14b) et le coulisseau (15a,15b) à chaque fois dans des zones d'extrémité côté avant se faisant face de respectivement un agencement de corps de frottement (18a, 18c), un contact à frottement (17, 17a, 17b) électrique étant conçu à chaque fois entre un agencement de ligne à frottement (16, 22a, 22b) et un agencement de corps à frottement (18, 18d, 18a, 18c) et les agencements de ligne à frottement (16, 22a, 22b) sur le premier coulisseau intermédiaire (21a, 21b) de même que les agencements de corps à frottement (18, 18d, 18a, 18c) sur le second coulisseau intermédiaire (26a, 26b) étant reliés à chaque fois de façon électroconductrice les uns aux autres.

23. Bras de poussée télescopique selon l'une quelconque des revendications 1 à 22, **caractérisé en ce qu'**une longueur (46) de l'agencement de ligne à frottement (16; 22a, 22b; 23) correspond approximativement à la longueur du cadre porteur (14a, 146), du coulisseau intermédiaire (21a, 21b, 26a, 26b) ou du coulisseau (15a, 15b).

24. Bras de poussée télescopique selon l'une quelconque des revendications 1 à 23, **caractérisé en ce qu'**une longueur (48) du contact à frottement (17, 17a, 17b) de l'agencement de corps à frottement (18 à 18e) entre l'agencement de ligne à frottement (16, 22a, 22b; 23) et l'agencement de corps à frottement (18 à 18e) correspond à une fraction de la longueur (46) de l'agencement de ligne à frottement (16; 22a, 22b; 23).

25. Bras de poussée télescopique selon l'une quelconque des revendications 1 à 24, **caractérisé en ce que** l'agencement de ligne à frottement (16; 22a, 22b; 23) est formé par plusieurs lignes à frottement (54) disposées en parallèle les unes à côté des autres et chacun des agencements de corps à frottement (18 à 18e) est formé par plusieurs corps à frottement (55) actionnés par ressort, en particulier des balais de charbon.

26. Dispositif de réception de charge (9) pour la réception de charges ou la distribution de charges de moyens auxiliaires de chargement (12), en particulier pour un véhicule transporteur, par exemple un appareil de commande de rayonnages (6), d'un système de stock (1), doté de deux bras de poussée télescopiques (11a, 11b) agencés parallèlement entre eux, disposés à distance l'un de l'autre et pouvant sortir de façon synchrone transversalement à une allée (2), **caractérisé en ce que** les bras de poussée télescopiques (11a, 11b) sont conçus selon l'une quelconque des revendications 1 à 25.
